# EUROPEAN PATENT APPLICATION

(11) **EP 3 711 946 A1**
(43) Date of publication of application: **23.09.2020**
(21) Application number: 20168855.3
(22) Date of filing: 03.08.2015
(51) Int. Cl.: B32B 17/10, C03C 27/12, B32B 27/18, C09K 11/02, C09K 11/06

(54) **INTERMEDIATE FILM FOR LAMINATED GLASS, AND LAMINATED GLASS**

(30) Priority: 01.08.2014 JP 2014158222; 01.08.2014 JP 2014158224
(62) Divisional of application: 15827272.4
(71) Applicant: Sekisui Chemical Co., Ltd., Osaka-shi, Osaka 530-0047 (JP)
(72) Inventor: OOTA, Yuusuke, Koka-shi Shiga, 528-8585 (JP); IZU, Yasuyuki, Koka-shi Shiga, 528-8585 (JP); NAKAJIMA, Daisuke, Koka-shi Shiga, 528-8585 (JP)
(74) Representative: Cabinet Beau de Loménie

(57) **Abstract**

The present invention aims to provide an interlayer film for laminated glass capable of displaying images with a high luminous intensity when irradiated with a light beam, and a laminated glass including the interlayer film for laminated glass. The present invention relates to an interlayer film for laminated glass, including a light-emitting layer that contains a thermoplastic resin and a lanthanoid complex with a polydentate ligand containing a halogen atom, the light-emitting layer containing not more than 50 ppm in total of potassium, sodium, and magnesium.

## Description

### TECHNICAL FIELD

The present invention relates to an interlayer film for laminated glass capable of displaying images with a high luminous intensity when irradiated with a light beam, and a laminated glass including the interlayer film for laminated glass.

### BACKGROUND ART

Laminated glass is less likely to scatter even when shattered by external impact and can be safely used. Due to this advantage, laminated glass has been widely used, for example, in front, side, and rear windshields of vehicles including automobiles and windowpanes of aircraft, buildings, or the like. A known example of laminated glass is a type of laminated glass including at least a pair of glass plates integrated through, for example, an interlayer film for laminated glass which contains a liquid plasticizer and a polyvinyl acetal resin.

A recent growing need is the development of a head-up display (HUD) which presents meters showing vehicle driving data (e.g. driving speed information) within a usual range of vision in the front windshield of a vehicle.

Various types of HUDs are known. The most typical one is a HUD designed such that a display unit of an instrumental panel projects information (e.g. driving speed information) sent from a control unit onto a front windshield to enable a driver to view the information at a usual viewpoint, namely, within a usual range of vision in the front windshield.

An example of interlayer films for laminated glass for a HUD is an interlayer film for laminated glass having a wedge shape with a predetermined wedge angle proposed in Patent Literature 1. This interlayer film can solve a HUD's drawback that a meter image displayed on a laminated glass appears double.

Patent Literature 1 also discloses a laminated glass which is partially free from the HUD's drawback of double meter image phenomenon. Yet, not the entire face of the laminated glass is free from the double meter image problem.

The applicant of this application discloses in Patent Literature 2 an interlayer film for laminated glass including a light-emitting layer that contains a binder resin and at least one light-emitting material selected from the group consisting of a light-emitting powder, a luminescent pigment, and a luminescent dye. The light-emitting material such as a light-emitting powder, a luminescent pigment, a luminescent dye, or the like emits light when it is irradiated with light having specific wavelengths. When an interlayer film for laminated glass including such a light-emitting material is irradiated with light, light-emitting particles contained in the interlayer film emit light, thereby displaying high contrast images.

### CITATION LIST

### - Patent Literature

Patent Literature 1: JP H4-502525 T
Patent Literature 2: JP 2014-24312 A

### SUMMARY OF INVENTION

### - Technical Problem

For producing a light-emitting sheet which contains light-emitting materials and can display higher contrast images, it is important to use a light-emitting material having higher light emission intensity. As a result of intensive studies, the present inventors found that lanthanoid complexes with a polydentate ligand containing a halogen atom show extremely high light emission intensity. Unfortunately, however, interlayer films for laminated glass produced using a lanthanoid complex with a polydentate ligand containing a halogen atom do not emit light at as high an intensity as expected.

In view of the current state of the art described above, the present invention aims to provide an interlayer film for laminated glass capable of displaying images with a high luminous intensity when irradiated with a light beam, and a laminated glass including the interlayer film for laminated glass.

### - Solution to Problem

The first aspect of the present invention relates to an interlayer film for laminated glass, including a light-emitting layer that contains a thermoplastic resin and a lanthanoid complex with a polydentate ligand containing a halogen atom, the light-emitting layer containing not more than 50 ppm in total of potassium, sodium, and magnesium.

The second aspect of the present invention relates to an interlayer film for laminated glass, including: a light-emitting layer that contains a thermoplastic resin and a lanthanoid complex with a polydentate ligand containing a halogen atom; and an adhesive layer that contains a thermoplastic resin and at least one metal salt selected from the group consisting of alkali metal salts, alkaline earth metal salts, and magnesium salts, the light-emitting layer containing a smaller total amount of alkali metals, alkaline-earth metals, and magnesium than the adhesive layer.

The present invention will be described in detail below.

First, the first aspect of the present invention is specifically described.

The present inventors investigated the cause of the reduction in the emission intensity of interlayer films for laminated glass produced using a lanthanoid complex with a polydentate ligand containing a halogen atom. They have found that potassium, sodium, and magnesium, in particular magnesium, in interlayer films for laminated glass cause the problem.

Interlayer films for laminated glass contain potassium, sodium, and magnesium derived from materials such as a neutralizer used in the production of a thermoplastic resin. When a lanthanoid complex with a polydentate ligand containing a halogen atom is added to produce such interlayer films for laminated glass, supposedly the lanthanoid complex interacts with potassium, sodium, and magnesium so that the light-emitting ability of the lanthanoid complex decreases.

As a result of further intensive investigations, the present inventors have found that a reduction in the light-emitting properties of interlayer films for laminated glass containing a lanthanoid complex with a polydentate ligand containing a halogen atom can be avoided by controlling the total amount of potassium, sodium, and magnesium in the interlayer films to a certain amount or less, thereby completing the first aspect of the present invention.

The interlayer film for laminated glass of the first aspect of the present invention includes a light-emitting layer that contains a thermoplastic resin and a lanthanoid complex with a polydentate ligand containing a halogen atom. The light-emitting layer that contains a lanthanoid complex with a polydentate ligand containing a halogen atom as a light-emitting material enables the interlayer film to display high contrast images when the light-emitting layer is irradiated with a light beam.

Any thermoplastic resin may be used, and examples thereof include polyvinyl acetal resins, ethylene-vinyl acetate copolymer resins, ethylene-acrylic copolymer resins, polyurethane resins, polyurethane resins including sulfur, polyvinyl alcohol resins, vinyl chloride resins, and polyethylene terephthalate resins. Suitable among these are polyvinyl acetal resins because when a polyvinyl acetal resin is used with a plasticizer, the resulting interlayer film for laminated glass has excellent adhesion to glass.

The polyvinyl acetal is not particularly limited as long as it is obtained by acetalization of a polyvinyl alcohol with an aldehyde. Preferred is polyvinyl butyral. Two or more types of polyvinyl acetal may be used as needed.

As for the degree of acetalization of the polyvinyl acetal, the lower limit is preferably 40 mol%, more preferably 60 mol%, and the upper limit is preferably 85 mol%, more preferably 75 mol%.

As for the hydroxy group content of the polyvinyl acetal, the preferable lower limit is 15 mol%, and the preferable upper limit is 35 mol%. When the hydroxy group content is 15 mol% or more, formation of the interlayer film for laminated glass is facilitated. When the hydroxy group content is 35 mol% or less, the interlayer film for laminated glass is easy to handle.

The degree of acetalization and the hydroxy group content can be measured in accordance with, for example, "Testing method for polyvinyl butyral" in JIS K 6728.

The polyvinyl acetal can be prepared by acetalization of a polyvinyl alcohol with an aldehyde. The polyvinyl alcohol is typically prepared by saponification of polyvinyl acetate. Usually, a polyvinyl alcohol having a degree of saponification of 70 to 99.8 mol% is used.

As for the degree of polymerization of the polyvinyl alcohol, the preferable lower limit is 500, and the preferable upper limit is 4000. A polyvinyl alcohol with a degree of polymerization of 500 or more imparts penetration resistance to a laminated glass to be formed. When a polyvinyl alcohol with a degree of polymerization of 4000 or less is used, formation of the interlayer film for laminated glass is facilitated. The more preferable lower limit of the degree of polymerization of the polyvinyl alcohol is 1000, and the more preferable upper limit is 3600.

The aldehyde is not particularly limited. Usually, a C1-C10 aldehyde is suitably used. Any C1-C10 aldehyde can be used, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Preferred among these are n-butyraldehyde, n-hexylaldehyde, and n-valeraldehyde, and more preferred is n-butyraldehyde. Any of these aldehydes may be used alone, or two or more of them may be used in combination.

The lanthanoid complex with a polydentate ligand containing a halogen atom emits light at a high intensity when irradiated with a light beam. In particular, a lanthanoid complex with a bidentate ligand containing a halogen atom or a lanthanoid complex with a tridentate ligand containing a halogen atom is preferably used because of the ability to emit light at a higher intensity when irradiated with a light beam. Other examples of the lanthanoid complex with a polydentate ligand containing a halogen atom include lanthanoid complexes with a tetradentate ligand containing a halogen atom, lanthanoid complexes with a pentadentate ligand containing a halogen atom, and lanthanoid complexes with a hexadentate ligand containing a halogen atom.

The inventors of the first aspect of the present invention have found that, since a lanthanoid complex with a polydentate ligand containing a halogen atom emits light having a wavelength of 580 to 780 nm at an extremely high intensity, among lanthanoid complexes, when irradiated with light having a wavelength of 300 to 410 nm, an interlayer film for laminated glass containing such a lanthanoid complex can display high contrast images.

As used herein, examples of the lanthanoid include lanthanum, cerium, praseodymium, neodymium, promethium, samarium, europium, gadolinium, terbium, dysprosium, holmium, erbium, thulium, ytterbium, and lutetium. For higher light emission intensity, the lanthanoid is preferably neodymium, europium, or terbium, more preferably europium or terbium, still more preferably europium.

Examples of the lanthanoid complex with a bidentate ligand containing a halogen atom include tris(trifluoroacetylacetone)phenanthroline europium, tris(trifluoroacetylacetone)diphenyl phenanthroline europium, tris(hexafluoroacetylacetone)diphenyl phenanthroline europium, tris(hexafluoroacetylacetone)bis(triphenylphosphine)europium, tris(trifluoroacetylacetone)2,2'-bipyridine europium, and tris(hexafluoroacetylacetone)2,2'-bipyridine europium.

Examples of the lanthanoid complex with a tridentate ligand containing a halogen atom include terpyridine trifluoroacetylacetone europium and terpyridine hexafluoroacetylacetone europium.

Examples of the halogen atom in the lanthanoid complex with a polydentate ligand containing a halogen atom include a fluorine atom, a chlorine atom, a bromine atom, and an iodine atom. Preferred is a fluorine atom for better stability of the ligand structure.

The lanthanoid complex with a polydentate ligand containing a halogen atom is preferably a lanthanoid complex with a bidentate ligand containing a halogen atom and having an acetylacetone skeleton because of its excellent initial light-emitting properties.

Examples of the lanthanoid complex with a bidentate ligand containing a halogen atom and having an acetylacetone skeleton include Eu(TFA)₃phen, Eu(TFA)₃dpphen, Eu(HFA)₃phen, [Eu(FOD)₃]bpy, [Eu(TFA)₃]tmphen, and [Eu(FOD)₃]phen. The structures of these lanthanoid complexes with a bidentate ligand containing a halogen atom and having an acetylacetone skeleton are shown below.

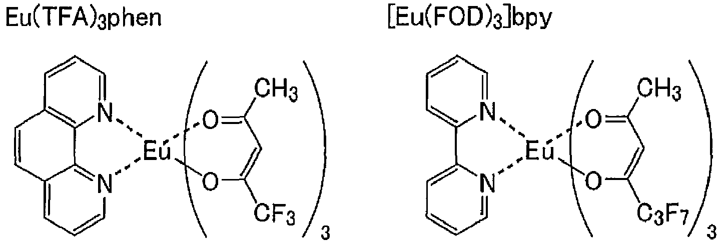

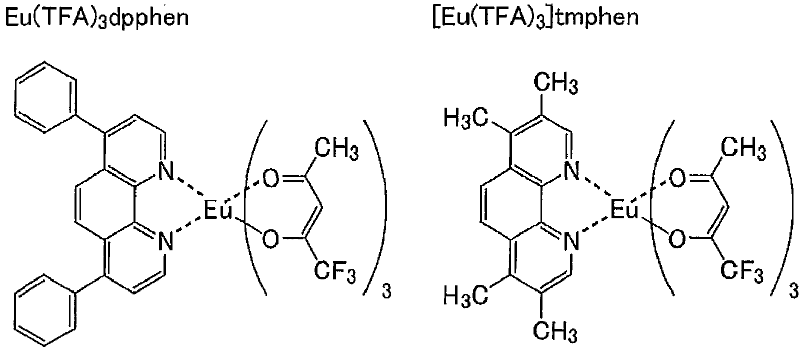

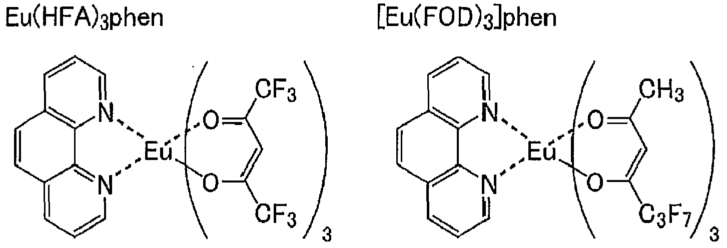

The lanthanoid complex with a polydentate ligand containing a halogen atom is preferably in the form of particles. The lanthanoid complex with a polydentate ligand containing a halogen atom in the form of particles can be readily dispersed in an interlayer film for laminated glass.

In the case of a lanthanoid complex with a polydentate ligand containing a halogen atom in the form of particles, the lower limit of the average particle size of the lanthanoid complex is preferably 0.01 µm, more preferably 0.03 µm, and the upper limit is preferably 10 µm, more preferably 1 µm.

As for the amount of the lanthanoid complex with a polydentate ligand containing a halogen atom in the light-emitting layer relative to 100 parts by weight of the thermoplastic resin, the lower limit is preferably 0.001 parts by weight, and the upper limit is 10 parts by weight. When the amount of the lanthanoid complex with a polydentate ligand containing a halogen atom is 0.001 parts by weight or more, images with a much higher contrast can be displayed. When the amount of the lanthanoid complex with a polydentate ligand containing a halogen atom is 10 parts by weight or less, an interlayer film for laminated glass with a higher transparency can be obtained. The lower limit of the amount of the lanthanoid complex with a polydentate ligand containing a halogen atom is more preferably 0.01 parts by weight, still more preferably 0.05 parts by weight, particularly preferably 0.2 parts by weight, and the upper limit is more preferably 5 parts by weight, still more preferably 1 part by weight.

The light-emitting layer may contain potassium, sodium, and magnesium derived from materials such as a neutralizer used in the production of a thermoplastic resin. In the interlayer film for laminated glass of the first aspect of the present invention, the light-emitting layer contains not more than 50 ppm in total of potassium, sodium, and magnesium.

When the total amount of potassium, sodium, and magnesium is not more than 50 ppm, the light-emitting properties of the lanthanoid complex with a polydentate ligand containing a halogen atom contained together can be prevented from decreasing. The total amount of potassium, sodium, and magnesium in the light-emitting layer is preferably not more than 40 ppm, more preferably not more than 35 ppm, still more preferably not more than 10 ppm.

The light-emitting layer preferably contains magnesium in an amount of 40 ppm or less. When the amount of magnesium in the light-emitting layer is 40 ppm or less, a reduction in the light-emitting ability of the lanthanoid complex with a polydentate ligand containing a halogen atom in the light-emitting layer can be more reliably suppressed. The light-emitting layer contains magnesium in an amount of more preferably 35 ppm or less, still more preferably 30 ppm or less, particularly preferably 20 ppm or less. The amount of magnesium in the light-emitting layer may be 0 ppm.

The total amount of potassium, sodium, and magnesium in the light-emitting layer is controlled to be not more than 50 ppm preferably by washing the thermoplastic resin several times with an excess amount of ion exchange water. In particular, the total amount of potassium, sodium, and magnesium in the light-emitting layer can be controlled to be not more than 50 ppm by a combination of techniques, such as washing with ion exchange water several times before a neutralization step in the production of a thermoplastic resin, washing with ion exchange water several times after the neutralization step, and using a 10-fold amount or more of ion exchange water in the washing steps.

The light-emitting layer preferably further contains a dispersant. The presence of a dispersant prevents the lanthanoid complex with a polydentate ligand containing a halogen atom from aggregating, and allows for more uniform light emission.

Examples of the dispersant include compounds having a sulfonic acid structure such as salts of a linear alkylbenzenesulfonic acid, compounds having an ester structure such as diester compounds, alkyl esters of recinoleic acid, phthalic acid esters, adipic acid esters, sebacic acid esters, and phosphoric acid esters, compounds having an ether structure such as polyoxyethylene glycol, polyoxypropylene glycol, and alkylphenyl-polyoxyethylene ethers, compounds having a carboxylic acid structure such as polycarboxylic acids, compounds having an amine structure such as laurylamine, dimethyllaurylamine, oleyl propylene diamine, polyoxyethylene secondary amines, polyoxyethylene tertiary amines, and polyoxyethylene diamines, compounds having a polyamine structure such as polyalkylene polyamine alkylene oxides, compounds having an amide structure such as oleic acid diethanolamide and fatty acid alkanolamides, and compounds having a high molecular weight amide structure such as polyvinyl pyrrolidone and polyester acid amide amine salts. Other examples include high molecular weight dispersants such as polyoxyethylene alkyl ether phosphates (salts), polycarboxylic acid polymers, and condensed ricinoleic acid esters. The term "high molecular weight dispersant" is defined as a dispersant having a molecular weight of 10000 or higher.

In the case where the dispersant is used, the preferable lower limit of the amount of the dispersant in the light-emitting layer is 1 part by weight relative to 100 parts by weight of the lanthanoid complex with a polydentate ligand containing a halogen atom in the light-emitting layer, and the preferable upper limit is 50 parts by weight. When the amount of the dispersant is within the range, the lanthanoid complex with a polydentate ligand containing a halogen atom can be homogeneously dispersed in the light-emitting layer. The lower limit of the amount of the dispersant is more preferably 3 parts by weight, still more preferably 5 parts by weight, and the upper limit is more preferably 30 parts by weight, still more preferably 25 parts by weight.

The light-emitting layer may further contain an ultraviolet absorber. The presence of an ultraviolet absorber in the light-emitting layer improves the lightfastness of the light-emitting layer.

In order to ensure that the interlayer film for laminated glass can produce an image with a much higher contrast, the upper limit of the amount of the ultraviolet absorber relative to 100 parts by weight of the thermoplastic resin in the light-emitting layer is preferably 1 part by weight, more preferably 0.5 parts by weight, still more preferably 0.2 parts by weight, particularly preferably 0.1 parts by weight.

Examples of the ultraviolet absorber include compounds having a malonic acid ester structure, compounds having an oxalic anilide structure, compounds having a benzotriazole structure, compounds having a benzophenone structure, compounds having a triazine structure, compounds having a benzoate structure, and compounds having a hindered amine structure.

The light-emitting layer may further contain a plasticizer.

Any plasticizer may be used, and examples include organic ester plasticizers such as monobasic organic acid esters and polybasic organic acid esters, and phosphoric acid plasticizers such as organic phosphoric acid plasticizers and organic phosphorous acid plasticizers. The plasticizer is preferably a liquid plasticizer.

The monobasic organic acid esters are not particularly limited, and examples include glycolesters obtainable by the reaction of a glycol (e.g. triethylene glycol, tetraethylene glycol, or tripropyleneglycol) and a monobasic organic acid (e.g. butyric acid, isobutyric acid, caproic acid, 2-ethylbutyric acid, heptanoic acid, n-octylic acid, 2-ethylhexanoic acid, pelargonic acid (n-nonylic acid), or decylic acid). In particular, triethylene glycol dicaproate, triethylene glycol di-2-ethylbutyrate, triethylene glycol di-n-octylate, and triethylene glycol di-2-ethylhexylate are preferred.

The polybasic organic acid esters are not particularly limited, and examples include ester compounds of a polybasic organic acid (e.g. adipic acid, sebacic acid, or azelaic acid) and a C4-C8 linear or branched alcohol. In particular, dibutyl sebacate, dioctyl azelate, dibutylcarbitol adipate, and the like are preferred.

The organic ester plasticizers are not particularly limited, and examples include triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethyl butyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, dihexyl adipate, dioctyl adipate, hexylcyclohexyl adipate, diisononyl adipate, heptyl nonyl adipate, dibutyl sebacate, oil-modified alkyd sebacate, mixtures of a phosphoric acid ester and an adipic acid ester, mixed adipic acid esters produced from an adipic acid ester, a C4-C9 alkyl alcohol, and a C4-C9 cyclic alcohol, and C6-C8 adipic acid esters such as hexyl adipate.

The organic phosphoric acid plasticizers are not particularly limited, and examples include tributoxyethyl phosphate, isodecylphenyl phosphate, and triisopropyl phosphate.

Preferred among the plasticizers is at least one selected from the group consisting of dihexyladipate (DHA), triethylene glycol di-2-ethylhexanoate (3GO), tetraethylene glycol di-2-ethylhexanoate (4GO), triethylene glycol di-2-ethylbutylate (3GH), tetraethylene glycol di-2-ethylbutylate (4GH), tetraethylene glycol di-n-heptanoate (4G7), and triethylene glycol di-n-heptanoate (3G7) .

The plasticizer is more preferably triethylene glycol di-2-ethylhexanoate (3GO), triethylene glycol di-2-ethylbutylate (3GH), tetraethylene glycol di-2-ethylhexanoate (4GO), or dihexyladipate (DHA), still more preferably tetraethylene glycol di-2-ethylhexanoate (4GO) or triethylene glycol di-2-ethylhexanoate (3GO), particularly preferably triethylene glycol di-2-ethylhexanoate because these plasticizers are less likely to undergo hydrolysis.

The amount of the plasticizer in the light-emitting layer is not particularly limited, but the preferable lower limit is 30 parts by weight, and the preferable upper limit is 100 parts by weight, relative to 100 parts by weight of the thermoplastic resin. When the amount of the plasticizer is 30 parts by weight or more, the interlayer film for laminated glass has low melt viscosity, which facilitates formation of the interlayer film for laminated glass. When the amount of the plasticizer is 100 parts by weight or less, an interlayer film for laminated glass having high transparency can be produced. The lower limit of the amount of the plasticizer is more preferably 35 parts by weight, still more preferably 45 parts by weight, particularly preferably 50 parts by weight. The upper limit of the amount of the plasticizer is more preferably 80 parts by weight, still more preferably 70 parts by weight, particularly preferably 63 parts by weight.

The light-emitting layer preferably contains an antioxidant to achieve high lightfastness.

Any antioxidant may be used, and examples include antioxidants having a phenolic structure, sulfur-containing antioxidants, and phosphorus-containing antioxidants.

The antioxidants having a phenolic structure refer to antioxidants having a phenolic skeleton. Examples of the antioxidants having a phenolic structure include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis(methylene-3-(3',5'-butyl-4-hydroxyphenyl)propionat e]methane, 1,3,3-tris-(2-methyl-4-hydroxy-5-t-butylphenol)butane, 1,3,5-trimethyl-2,4,6-tris(3,5-di-t-butyl-4-hydroxybenzyl)b enzene, bis(3,3'-t-butylphenol)butyric acid glycol ester, and pentaerythritoltetrakis[3-(3,5-di-tert-butyl-4-hydroxypheny l)propionate]. Any of the antioxidants may be used alone, or two or more of these may be used in combination.

The light-emitting layer may contain an additive such as a photostabilizer, an antistatic agent, a blue dye, a blue pigment, a green dye, or a green pigment as needed.

The interlayer film for laminated glass of the first aspect of the present invention may have a single layer structure consisting only of the light-emitting layer or a multilayer structure in which a different layer is additionally stacked.

In the case where the interlayer film for laminated glass of the first aspect of the present invention has a multilayer structure, the light-emitting layer may be disposed on the entire or part of a face of the interlayer film for laminated glass, and may be disposed on the entire or part of a face in a direction perpendicular to the thickness direction of the interlayer film for laminated glass. In the case where the light-emitting layer is partially disposed, information can be controlled to be displayed only at the disposed part as light-emitting area without being displayed at the other part as non-light-emitting area.

In the case where the interlayer film for laminated glass of the first aspect of the present invention has a multilayer structure, an interlayer film for laminated glass with various functions can be produced by controlling the components constituting the light-emitting layer and a different layer.

For example, in order to obtain the interlayer film for laminated glass of the first aspect of the present invention having sound-insulating properties, the amount of the plasticizer (hereinafter, also referred to as amount X) relative to 100 parts by weight of the thermoplastic resin in the light-emitting layer may be controlled to be more than the amount of the plasticizer (hereinafter, also referred to as amount Y) relative to 100 parts by weight of the thermoplastic resin in the different layer. In this case, the amount X is more than the amount Y preferably by 5 parts by weight or more, more preferably by 10 parts by weight or more, still more preferably by 15 parts by weight or more. For allowing the interlayer film for laminated glass to have higher penetration resistance, the difference between the amount X and the amount Y is preferably 50 parts by weight or less, more preferably 40 parts by weight or less, still more preferably 35 parts by weight or less. The difference between the amount X and the amount Y is calculated based on the following formula: (difference between the amount X and the amount Y) = (the amount X - the amount Y)

The lower limit of the amount X is preferably 45 parts by weight, more preferably 50 parts by weight, still more preferably 55 parts by weight, and the upper limit of the amount X is preferably 80 parts by weight, more preferably 75 parts by weight, still more preferably 70 parts by weight. When the amount X is adjusted to the preferable lower limit or more, high sound-insulating properties can be exerted. When the amount X is adjusted to the preferable upper limit or less, the plasticizer can be prevented from bleeding out, so that a reduction in the transparency or the adhesiveness of the interlayer film for laminated glass can be prevented.

The lower limit of the amount Y is preferably 20 parts by weight, more preferably 30 parts by weight, still more preferably 35 parts by weight, and the upper limit of the amount Y is preferably 45 parts by weight, more preferably 43 parts by weight, still more preferably 41 parts by weight. When the amount Y is adjusted to the preferable lower limit or more, high penetration resistance can be exerted. When the amount Y is adjusted to the preferable upper limit or less, the plasticizer can be prevented from bleeding out, so that a reduction in the transparency or the adhesiveness of the interlayer film for laminated glass can be prevented.

In order to obtain the interlayer film for laminated glass of the first aspect of the present invention having sound-insulating properties, the thermoplastic resin in the light-emitting layer is preferably a polyvinyl acetal X. The polyvinyl acetal X can be prepared by acetalization of a polyvinyl alcohol with an aldehyde. Usually, the polyvinyl alcohol can be obtained by saponification of polyvinyl acetate. The lower limit of the average degree of polymerization of the polyvinyl alcohol is preferably 200, and the upper limit thereof is preferably 5000. When the average degree of polymerization of the polyvinyl alcohol is 200 or higher, the penetration resistance of the interlayer film for laminated glass to be obtained can be improved. When the average degree of polymerization of the polyvinyl alcohol is 5000 or lower, formability of the light-emitting layer can be ensured. The lower limit of the average degree of polymerization of the polyvinyl alcohol is more preferably 500, and the upper limit thereof is more preferably 4000. The average degree of polymerization of the polyvinyl alcohol is determined by a method in accordance with "Testing methods for polyvinyl alcohol" in JIS K 6726.

The lower limit of the carbon number of an aldehyde used for acetalization of the polyvinyl alcohol is preferably 4, and the upper limit thereof is preferably 6. When an aldehyde having 4 or more carbon atoms is used, a sufficient amount of the plasticizer can be stably contained so that excellent sound-insulating properties can be obtained. Moreover, bleeding out of the plasticizer can be prevented. When an aldehyde having 6 or less carbon atoms is used, synthesis of the polyvinyl acetal X is facilitated to ensure the productivity. The C4-C6 aldehyde may be a linear or branched aldehyde, and examples thereof include n-butyraldehyde and n-valeraldehyde.

The upper limit of the hydroxy group content of the polyvinyl acetal X is preferably 30 mol%. When the hydroxy group content of the polyvinyl acetal X is 30 mol% or less, the plasticizer can be contained in an amount needed for exhibiting sound-insulating properties, and bleeding out of the plasticizer can be prevented. The upper limit of the hydroxy group content of the polyvinyl acetal X is more preferably 28 mol%, still more preferably 26 mol%, particularly preferably 24 mol%, and the lower limit thereof is preferably 10 mol%, more preferably 15 mol%, still more preferably 20 mol%. The hydroxy group content of the polyvinyl acetal X is a value in percentage (mol%) of the mol fraction obtained by dividing the amount of ethylene groups to which hydroxy groups are bonded by the amount of all the ethylene groups in the main chain. The amount of ethylene groups to which hydroxy groups are bonded can be determined by measuring the amount of ethylene groups to which hydroxy group are bonded in the polyvinyl acetal X by a method in accordance with "Testing methods for polyvinyl butyral" in JIS K 6728.

The lower limit of the acetal group content of the polyvinyl acetal X is preferably 60 mol%, and the upper limit thereof is preferably 85 mol%. When the acetal group content of the polyvinyl acetal X is 60 mol% or more, the light-emitting layer has higher hydrophobicity and can contain the plasticizer in an amount needed for exhibiting sound-insulating properties, and bleeding out of the plasticizer and whitening can be prevented. When the acetal group content of the polyvinyl acetal X is 85 mol% or less, synthesis of the polyvinyl acetal X is facilitated to ensure the productivity. The lower limit of the acetal group content of the polyvinyl acetal X is more preferably 65 mol%, still more preferably 68 mol%. The acetal group content can be determined by measuring the amount of ethylene groups to which acetal groups are bonded in the polyvinyl acetal X by a method in accordance with "Testing methods of polyvinyl butyral" in JIS K 6728.

The lower limit of the acetyl group content of the polyvinyl acetal X is preferably 0.1 mol%, and the upper limit thereof is preferably 30 mol%. When the acetyl group content of the polyvinyl acetal X is 0.1 mol% or more, the plasticizer can be contained in an amount needed for exhibiting sound-insulating properties, and bleeding out of the plasticizer can be prevented. When the acetyl group content of the polyvinyl acetal X is 30 mol% or less, the light-emitting layer has higher hydrophobicity to prevent whitening. The lower limit of the acetyl group content is more preferably 1 mol%, still more preferably 5 mol%, particularly preferably 8 mol%, and the upper limit thereof is more preferably 25 mol%, still more preferably 20 mol%. The acetyl group content is a value in percentage (mol%) of the mol fraction obtained by subtracting the amount of ethylene groups to which acetal groups are bonded and the amount of ethylene groups to which hydroxy group are bonded from the amount of all the ethylene groups in the main chain and dividing the resulting value by the amount of all the ethylene groups in the main chain.

The polyvinyl acetal X is especially preferably polyvinyl acetal with the acetyl group content of 8 mol% or more or polyvinyl acetal with the acetyl group content of less than 8 mol% and the acetal group content of 65 mol% or more. In this case, the light-emitting layer can readily contain the plasticizer in an amount needed for exhibiting sound-insulating properties. The polyvinyl acetal X is more preferably polyvinyl acetal having an acetyl group content of 8 mol% or more or polyvinyl acetal having an acetyl group content of less than 8 mol% and an acetal group content of 68 mol% or more.

In order to impart sound-insulating properties to the interlayer film for laminated glass of the first aspect of the present invention, the thermoplastic resin in the different layer is preferably a polyvinyl acetal Y. The polyvinyl acetal Y preferably contains a larger amount of hydroxy group than the polyvinyl acetal X.

The polyvinyl acetal Y can be prepared by acetalization of a polyvinyl alcohol with an aldehyde. The polyvinyl alcohol can be usually obtained by saponification of polyvinyl acetate. The lower limit of the average degree of polymerization of the polyvinyl alcohol is preferably 200, and the upper limit thereof is preferably 5000. When the average degree of polymerization of the polyvinyl alcohol is 200 or more, the penetration resistance of the interlayer film for laminated glass can be improved. When the average degree of polymerization of the polyvinyl alcohol is 5000 or less, the formability of the different layer can be ensured. The lower limit of the average degree of polymerization of the polyvinyl alcohol is more preferably 500, and the upper limit thereof is more preferably 4000.

The lower limit of the carbon number of an aldehyde used for acetalization of the polyvinyl alcohol is preferably 3, and the upper limit thereof is preferably 4. When the aldehyde having 3 or more carbon atoms is used, the penetration resistance of the interlayer film for laminated glass is improved. When the aldehyde having 4 or less carbon atoms is used, the productivity of the polyvinyl acetal Y is improved. The C3-C4 aldehyde may be a linear or branched aldehyde, and examples thereof include n-butyraldehyde.

The upper limit of the hydroxy group content of the polyvinyl acetal Y is preferably 33 mol%, and the lower limit thereof is preferably 28 mol%. When the hydroxy group content of the polyvinyl acetal Y is 33 mol% or less, whitening of the interlayer film for laminated glass can be prevented. When the hydroxy group content of the polyvinyl acetal Y is 28 mol% or more, the penetration resistance of the interlayer film for laminated glass can be improved.

The lower limit of the acetal group content of the polyvinyl acetal Y is preferably 60 mol%, and the upper limit thereof is preferably 80 mol%. When the acetal group content is 60 mol% or more, the plasticizer in an amount needed for exhibiting sufficient penetration resistance can be contained. When the acetal group content is 80 mol% or less, the adhesiveness between the different layer and glass can be ensured. The lower limit of the acetal group content is more preferably 65 mol%, and the upper limit thereof is more preferably 69 mol%.

The upper limit of the acetyl group content of the polyvinyl acetal Y is preferably 7 mol%. When the acetyl group content of the polyvinyl acetal Y is 7 mol% or less, the different layer has higher hydrophobicity, thereby preventing whitening. The upper limit of the acetyl group content is more preferably 2 mol%, and the lower limit thereof is preferably 0.1 mol%. The hydroxy group content, acetal group content, and acetyl group content of the polyvinyl acetal Y can be measured by the same methods as those described for the polyvinyl acetal X.

In order to obtain the interlayer film for laminated glass of the first aspect of the present invention having heat insulation properties, for example, one, two, or all of the light-emitting layer and different layer (s) may contain a heat ray absorber.

The heat ray absorber is not particularly limited as long as it shields infrared rays. Preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

In the case where the light-emitting layer contains a heat ray absorber, the amount of the heat ray absorber in 100% by weight of the light-emitting layer is preferably 0.00001% by weight or more and 1% by weight or less. In the case where the different layer contains a heat ray absorber, the amount of the heat ray absorber in 100% by weight of the different layer is preferably 0.00001% by weight or more and 1% by weight or less. When the amount of the heat ray absorber in the light-emitting layer or the different layer is within the above preferable range, sufficient heat insulation properties can be exhibited.

The thickness of the interlayer film for laminated glass of the first aspect of the present invention is not particularly limited. The lower limit of the thickness is preferably 50 µm, more preferably 100 µm, and the upper limit of the thickness is preferably 2200 µm, more preferably 1700 µm, still more preferably 1000 µm, particularly preferably 900 µm.

The lower limit of the thickness of the entire interlayer film for laminated glass means the thickness of the thinnest part of the entire interlayer film for laminated glass. The upper limit of the thickness of the entire interlayer film for laminated glass means the thickness of the thickest part of the entire interlayer film for laminated glass. In the case where the interlayer film for laminated glass of the first aspect of the present invention has a multilayer structure, the thickness of the light-emitting layer is not particularly limited, but the lower limit of the thickness is preferably 50 µm, and the upper limit of the thickness is preferably 1000 µm. When the light-emitting layer has a thickness within this range, it can emit light with sufficiently high contrast when irradiated with a light beam of a specific wavelength. The lower limit of the thickness of the light-emitting layer is more preferably 80 µm, still more preferably 90 µm, and the upper limit of the thickness is more preferably 760 µm, still more preferably 500 µm, particularly preferably 300 µm.

The interlayer film for laminated glass of the first aspect of the present invention may have a wedge-shaped cross section. In the case of the interlayer film for laminated glass having a wedge-shaped cross section, the wedge angle θ of the wedge shape can be controlled depending on the angle to attach the laminated glass, so that images can be displayed without double image phenomenon. For further preventing double image phenomenon, the lower limit of the wedge angle θ is preferably 0.1 mrad, more preferably 0.2 mrad, still more preferably 0.3 mrad, and the upper limit is preferably 1 mrad, more preferably 0.9 mrad. In the case where the interlayer film for laminated glass having a wedge-shaped cross section is produced by, for example, molding a resin composition by extrusion using an extruder, the interlayer may be thinnest at a region slightly inside of the edge on a thinner side thereof (specifically, when the distance from one side to the other side is X, the region of 0X to 0.2X from the edge on the thinner side toward the inside) and thickest at a region slightly inside of the edge on a thicker side thereof (specifically, when the distance from one side to the other side is X, the region of 0X to 0.2X from the edge on the thicker side toward the inside). Herein, such a shape is included in the wedge shape.

In the case of the interlayer film for laminated glass of the first aspect of the present invention having a wedge-shaped cross section, it preferably has a multilayer structure including a light-emitting layer and a different layer (hereinafter, also referred to as a "shape-adjusting layer"). The cross-sectional shape of the entire interlayer film for laminated glass can be controlled to have a wedge shape with a certain wedge angle by controlling the thickness of the light-emitting layer to be within a certain range and stacking the shape-adjusting layer. The shape-adjusting layer may be stacked on only one or both of the faces of the light-emitting layer. Further, multiple shape-adjusting layers may be stacked.

The light-emitting layer may have a wedge-shaped cross section or a rectangular cross section. Preferably, the difference between the maximum thickness and the minimum thickness of the light-emitting layer is 100 µm or less. In this case, images can be displayed with a certain level of luminance. The difference between the maximum thickness and the minimum thickness of the light-emitting layer is more preferably 95 µm or less, still more preferably 90 µm or less.

In the case of the interlayer film for laminated glass of the first aspect of the present invention having a wedge-shaped cross section, the thickness of the light-emitting layer is not particularly limited. The lower limit of the thickness is preferably 50 µm, and the upper limit of the thickness is preferably 700 µm. When the light-emitting layer has a thickness within the above range, sufficiently high contrast images can be displayed. The lower limit of the thickness of the light-emitting layer is more preferably 70 µm, still more preferably 80 µm, and the upper limit of the thickness is more preferably 400 µm, still more preferably 150 µm. The lower limit of the thickness of the light-emitting layer means the thickness of the thinnest part of the light-emitting layer. The upper limit of the thickness of the light-emitting layer means the thickness of the thickest part of the light-emitting layer.

The shape-adjusting layer is stacked on the light-emitting layer to control the cross-sectional shape of the entire interlayer film for laminated glass into a wedge shape with a certain wedge angle. Preferably, the shape-adjusting layer has a wedge-shaped, triangular, trapezoidal, or rectangular cross section. The cross-sectional shape of the entire interlayer film for laminated glass can be controlled to be a wedge shape with a certain wedge angle by stacking a shape-adjusting layer having a wedge-shaped, triangular, or trapezoidal cross section. Moreover, the cross-sectional shape of the entire interlayer film for laminated glass can be controlled using multiple shape-adjusting layers in combination.

The thickness of the shape-adjusting layer is not particularly limited. In view of the practical aspect and sufficient enhancement of the adhesive force and penetration resistance, the lower limit of the thickness is preferably 10 µm, more preferably 200 µm, still more preferably 300 µm, and the upper limit of the thickness is preferably 1000 µm, more preferably 800 µm. The lower limit of the thickness of the shape-adjusting layer means the thickness of the thinnest part of the shape-adjusting layer. The upper limit of the thickness of the shape-adjusting layer means the thickness of the thickest part of the shape-adjusting layer. When multiple shape-adjusting layers are used in combination, the thickness of the shape-adjusting layer means a total thickness of the shape-adjusting layers.

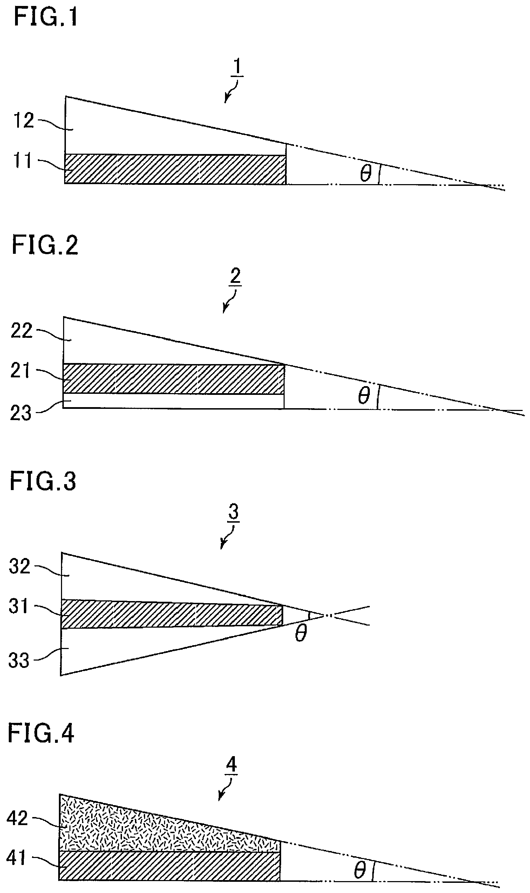

Figs. 1 to 3 each illustrate a schematic view of an exemplary embodiment of the interlayer film for laminated glass of the first aspect of the present invention having a wedge-shaped cross section. For the convenience of illustration, the interlayer films for laminated glass and the layers forming the interlayer films for laminated glass in Figs. 1 to 3 are illustrated to have different thicknesses and wedge angles from those of the actual products.

Fig. 1 illustrates a cross section of an interlayer film for laminated glass 1 in the thickness direction. The interlayer film for laminated glass 1 has a two-layer structure in which a shape-adjusting layer 12 is stacked on one face of a light-emitting layer 11 containing a light-emitting material. The entire interlayer film for laminated glass 1 is allowed to have a wedge shape with a wedge angle θ of 0.1 to 1 mrad by using the shape-adjusting layer 12 having a wedge, triangular, or trapezoidal shape together with the light-emitting layer 11 having a rectangular shape.

Fig. 2 illustrates a cross section of an interlayer film for laminated glass 2 in the thickness direction. The interlayer film for laminated glass 2 has a three-layer structure in which a shape-adjusting layer 22 and a shape-adjusting layer 23 are stacked on respective surfaces of a light-emitting layer 21 containing a light-emitting material. The entire interlayer film for laminated glass 2 is allowed to have a wedge shape with a wedge angle θ of 0.1 to 1 mrad by using the shape-adjusting layer 22 having a wedge, triangular, or trapezoidal shape together with the light-emitting layer 21 and the shape-adjusting layer 23 both having a rectangular shape with a certain thickness.

Fig. 3 illustrates a cross section of an interlayer film for laminated glass 3 in the thickness direction. The interlayer film for laminated glass 3 has a three-layer structure in which a shape-adjusting layer 32 and a shape-adjusting layer 33 are stacked on respective surfaces of a light-emitting layer 31 containing a light-emitting material. The entire interlayer film for laminated glass 3 is allowed to have a wedge shape with a wedge angle θ of 0.1 to 1 mrad by using the light-emitting layer 31 having a moderate wedge shape with the difference between the maximum thickness and the minimum thickness of 100 µm or less and stacking the wedge-shaped shape-adjusting layers 32 and 33.

The interlayer film for laminated glass of the first aspect of the present invention can be produced by any method. The interlayer film for laminated glass can be produced by, for example, preparing a resin composition for light-emitting layers by sufficiently mixing a plasticizer solution containing a plasticizer and a lanthanoid complex with a thermoplastic resin, and extruding the resin composition for light-emitting layers using an extruder.

Due to the light-emitting layer, the interlayer film for laminated glass of the first aspect of the present invention emits light under radiation of light at specific wavelengths. This feature allows for display of information with a high contrast. Examples of devices for radiation of light at specific wavelengths include a spot light source (LC-8 available from Hamamatsu Photonics K.K.), a xenon flush lamp (CW lamp available from Heraeus), and a black light (Carry Hand available from Iuchi Seieido Co., Ltd.).

A laminated glass including the interlayer film for laminated glass of the first aspect of the present invention between a pair of glass plates is also one aspect of the present invention.

The glass plates may be common transparent glass plates. Examples include plates of inorganic glass such as float glass plates, polished glass plates, figured glass plates, meshed glass plates, wired glass plates, colored glass plates, heat-absorbing glass plates, heat-reflecting glass plates, and green glass plates. An ultraviolet shielding glass plate including an ultraviolet shielding coat layer on a glass surface may also be used. However, this glass plate is preferably used on the side opposite to the side to be exposed to radiation of light at specific wavelengths. Other examples of the glass plates include organic plastic plates made of polyethylene terephthalate, polycarbonate, polyacrylate, or the like.

The glass plates may include two or more types of glass plates. For example, the laminated glass may be a laminate including the interlayer film for laminated glass of the present invention between a transparent float glass plate and a colored glass plate such as a green glass plate. The glass plates may include two or more glass plates with a different thickness.

Next, the second aspect of the present invention is specifically described.

The present inventors investigated the cause of the reduction in the emission intensity of interlayer films for laminated glass produced using a lanthanoid complex with a polydentate ligand containing a halogen atom. They have found that alkali metals, alkaline-earth metals, and magnesium in interlayer films for laminated glass cause the problem.

Interlayer films for laminated glass contain alkali metal salts, alkaline-earth metal salts, or magnesium salts which are blended as adhesion modifier to control the adhesive force between the interlayer films and a glass plate. When a lanthanoid complex with a polydentate ligand containing a halogen atom is added to produce such interlayer films for laminated glass, supposedly the lanthanoid complex interacts with alkali metals, alkaline-earth metals, or magnesium so that the light-emitting ability of the lanthanoid complex decreases . However, the addition of an adhesion modifier is necessary for maintaining the penetration resistance of interlayer films for laminated glass.

As a result of further intensive investigations, the present inventors have found that an interlayer film for laminated glass produced by stacking a light-emitting layer that contains a thermoplastic resin and a lanthanoid complex with a polydentate ligand containing a halogen atom and an adhesive layer that contains a thermoplastic resin and an alkali metal salt, an alkaline earth metal salt, or a magnesium salt, and reducing the amounts of alkali metals, alkaline-earth metals, and magnesium in the light-emitting layer can display higher contrast images when irradiated with a light beam while maintaining the penetration resistance, thereby completing the second aspect of the present invention.

The interlayer film for laminated glass of the second aspect of the present invention includes a light-emitting layer that contains a thermoplastic resin and a lanthanoid complex with a polydentate ligand containing a halogen atom. The light-emitting layer that contains a lanthanoid complex with a polydentate ligand containing a halogen atom as a light-emitting material enables the interlayer film for laminated glass of the second aspect of the present invention to display high contrast images when irradiated with a light beam.

Any thermoplastic resin may be used, and examples thereof include polyvinyl acetal resins, ethylene-vinyl acetate copolymer resins, ethylene-acrylic copolymer resins, polyurethane resins, polyurethane resins including sulfur, polyvinyl alcohol resins, vinyl chloride resins, and polyethylene terephthalate resins. Suitable among these are polyvinyl acetal resins because when a polyvinyl acetal resin is used with a plasticizer, the resulting interlayer film for laminated glass has excellent adhesion to glass.

The polyvinyl acetal is not particularly limited as long as it is obtained by acetalization of a polyvinyl alcohol with an aldehyde. Preferred is polyvinyl butyral. Two or more types of polyvinyl acetal may be used as needed.

As for the degree of acetalization of the polyvinyl acetal, the lower limit is preferably 40 mol%, more preferably 60 mol%, and the upper limit is preferably 85 mol%, more preferably 75 mol%.

As for the hydroxy group content of the polyvinyl acetal, the preferable lower limit is 15 mol%, and the preferable upper limit is 35 mol%. When the hydroxy group content is 15 mol% or more, formation of the interlayer film for laminated glass is facilitated. When the hydroxy group content is 35 mol% or less, the interlayer film for laminated glass is easy to handle.

The degree of acetalization and the hydroxy group content can be measured in accordance with, for example, "Testing method for polyvinyl butyral" in JIS K 6728.

The polyvinyl acetal can be prepared by acetalization of a polyvinyl alcohol with an aldehyde. The polyvinyl alcohol is typically prepared by saponification of polyvinyl acetate. Usually, a polyvinyl alcohol having a degree of saponification of 70 to 99.8 mol% is used.

As for the degree of polymerization of the polyvinyl alcohol, the preferable lower limit is 500, and the preferable upper limit is 4000. A polyvinyl alcohol with a degree of polymerization of 500 or more imparts penetration resistance to a laminated glass to be formed. When a polyvinyl alcohol with a degree of polymerization of 4000 or less is used, formation of the interlayer film for laminated glass is facilitated. The more preferable lower limit of the degree of polymerization of the polyvinyl alcohol is 1000, and the more preferable upper limit is 3600.

The aldehyde is not particularly limited. Usually, a C1-C10 aldehyde is suitably used. Any C1-C10 aldehyde can be used, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Preferred among these are n-butyraldehyde, n-hexylaldehyde, and n-valeraldehyde, and more preferred is n-butyraldehyde. Any of these aldehydes may be used alone, or two or more of them may be used in combination.

The lanthanoid complex with a polydentate ligand containing a halogen atom emits light at a high intensity when irradiated with a light beam.

The inventors of the second aspect of the present invention have found that, since a lanthanoid complex with a polydentate ligand containing a halogen atom emits light having a wavelength of 580 to 780 nm at an extremely high intensity, among lanthanoid complexes, when irradiated with light having a wavelength of 300 to 410 nm, an interlayer film for laminated glass containing such a lanthanoid complex can display high contrast images. In particular, a lanthanoid complex with a bidentate ligand containing a halogen atom or a lanthanoid complex with a tridentate ligand containing a halogen atom is preferably used.

As used herein, examples of the lanthanoid include lanthanum, cerium, praseodymium, neodymium, promethium, samarium, europium, gadolinium, terbium, dysprosium, holmium, erbium, thulium, ytterbium, and lutetium. For higher light emission intensity, the lanthanoid is preferably neodymium, europium, or terbium, more preferably europium or terbium, still more preferably europium.

Examples of the lanthanoid complex with a bidentate ligand containing a halogen atom include tris(trifluoroacetylacetone)phenanthroline europium, tris(trifluoroacetylacetone)diphenyl phenanthroline europium, tris(hexafluoroacetylacetone)diphenyl phenanthroline europium, tris(hexafluoroacetylacetone)bis(triphenylphosphine)europium, tris(trifluoroacetylacetone)2,2'-bipyridine europium, and tris(hexafluoroacetylacetone)2,2'-bipyridine europium.

Examples of the lanthanoid complex with a tridentate ligand containing a halogen atom include terpyridine trifluoroacetylacetone europium and terpyridine hexafluoroacetylacetone europium.

Examples of the halogen atom in the lanthanoid complex with a polydentate ligand containing a halogen atom include a fluorine atom, a chlorine atom, a bromine atom, and an iodine atom. Preferred is a fluorine atom for better stability of the ligand structure.

The lanthanoid complex with a polydentate ligand containing a halogen atom is preferably a lanthanoid complex with a bidentate ligand containing a halogen atom and having an acetylacetone skeleton because of its excellent initial light-emitting properties.

Examples of the lanthanoid complex with a bidentate ligand containing a halogen atom and having an acetylacetone skeleton include Eu(TFA)₃phen, Eu(TFA)₃dpphen, Eu(HFA)₃phen, [Eu(FOD)₃]bpy, [Eu(TFA)₃]tmphen, and [Eu(FOD)₃]phen. The structures of these lanthanoid complexes with a bidentate ligand containing a halogen atom and having an acetylacetone skeleton are shown below.

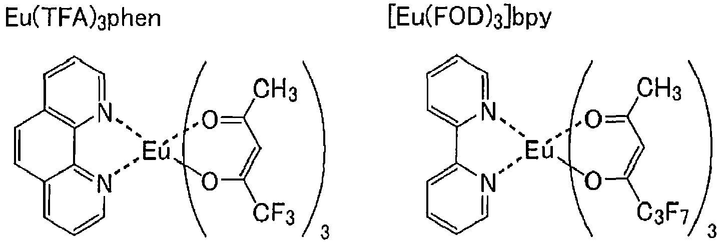

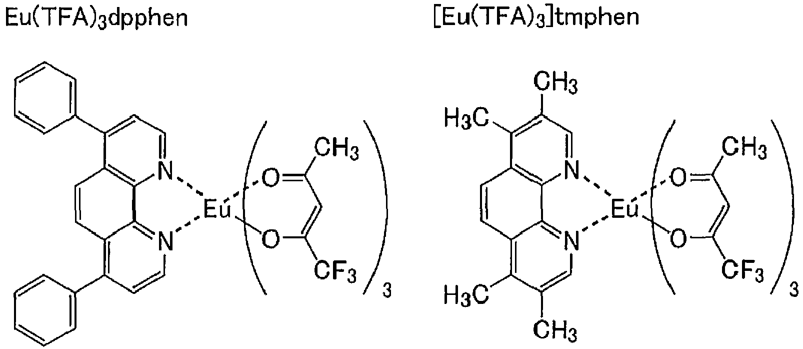

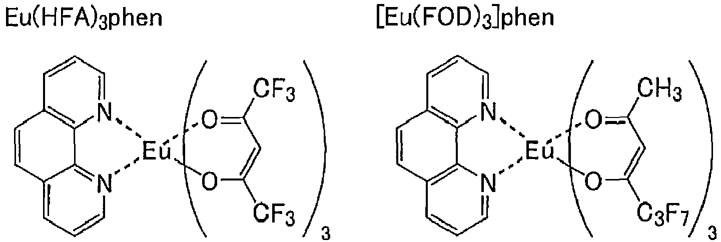

The lanthanoid complex with a polydentate ligand containing a halogen atom is preferably in the form of particles. The lanthanoid complex with a polydentate ligand containing a halogen atom in the form of particles can be readily dispersed in an interlayer film for laminated glass.

As for the average particle size of the particles of the lanthanoid complex with a polydentate ligand containing a halogen atom, the lower limit is preferably 0.01 µm, more preferably 0.03 µm, and the upper limit is preferably 10 µm, more preferably 1 µm.

As for the amount of the lanthanoid complex with a polydentate ligand containing a halogen atom in the light-emitting layer relative to 100 parts by weight of the thermoplastic resin, the lower limit is preferably 0.001 parts by weight, and the upper limit is 10 parts by weight. When the amount of the lanthanoid complex with a polydentate ligand containing a halogen atom is 0.001 parts by weight or more, images with a much higher contrast can be displayed. When the amount of the lanthanoid complex with a polydentate ligand containing a halogen atom is 10 parts by weight or less, an interlayer film for laminated glass with a higher transparency can be obtained. The lower limit of the amount of the lanthanoid complex with a polydentate ligand containing a halogen atom is more preferably 0.01 parts by weight, still more preferably 0.05 parts by weight, particularly preferably 0.2 parts by weight, and the upper limit is more preferably 5 parts by weight, still more preferably 1 part by weight.

The light-emitting layer may contain metals, such as alkali metals, alkaline-earth metals, or magnesium, derived from materials such as a neutralizer used in the synthesis of the thermoplastic resin. In the interlayer film for laminated glass of the second aspect of the present invention, the light-emitting layer contains a smaller total amount of alkali metals, alkaline-earth metals, and magnesium than the adhesive layer. Specifically, the light-emitting layer contains a smaller total amount of sodium, potassium, and magnesium than the adhesive layer. Due to this feature, the light-emitting ability of the lanthanoid complex with a polydentate ligand containing a halogen atom contained in the light-emitting layer can be prevented from decreasing.

The light-emitting layer preferably contains magnesium in an amount of 40 ppm or less. When the amount of magnesium in the light-emitting layer is 40 ppm or less, a reduction in the light-emitting ability of the lanthanoid complex with a polydentate ligand containing a halogen atom in the light-emitting layer can be more reliably suppressed. The light-emitting layer contains magnesium in an amount of more preferably 35 ppm or less, still more preferably 30 ppm or less, particularly preferably 20 ppm or less. The amount of magnesium in the light-emitting layer may be 0 ppm.

The total amount of metals such as alkali metals, alkaline-earth metals, or magnesium in the light-emitting layer is reduced preferably by washing the thermoplastic resin several times with an excess amount of ion exchange water. In particular, the total amount of metals such as alkali metals, alkaline-earth metals, or magnesium in the light-emitting layer can be reduced by a combination of techniques, such as washing with ion exchange water several times before a neutralization step in the production of a thermoplastic resin, washing with ion exchange water several times after the neutralization step, and using a 10-fold amount or more of ion exchange water in the washing steps.

The light-emitting layer preferably further contains a dispersant. The presence of a dispersant prevents the lanthanoid complex with a polydentate ligand containing a halogen atom from aggregating, and allows for more uniform light emission.

Examples of the dispersant include compounds having a sulfonic acid structure such as salts of a linear alkylbenzenesulfonic acid, compounds having an ester structure such as diester compounds, alkyl esters of recinoleic acid, phthalic acid esters, adipic acid esters, sebacic acid esters, and phosphoric acid esters, compounds having an ether structure such as polyoxyethylene glycol, polyoxypropylene glycol, and alkylphenyl-polyoxyethylene ethers, compounds having a carboxylic acid structure such as polycarboxylic acids, compounds having an amine structure such as laurylamine, dimethyllaurylamine, oleyl propylene diamine, polyoxyethylene secondary amines, polyoxyethylene tertiary amines, and polyoxyethylene diamines, compounds having a polyamine structure such as polyalkylene polyamine alkylene oxides, compounds having an amide structure such as oleic acid diethanolamide and fatty acid alkanolamides, and compounds having a high molecular weight amide structure such as polyvinyl pyrrolidone and polyester acid amide amine salts. Other examples include high molecular weight dispersants such as polyoxyethylene alkyl ether phosphates (salts), polycarboxylic acid polymers, and condensed ricinoleic acid esters. The term "high molecular weight dispersant" is defined as a dispersant having a molecular weight of 10000 or higher.

In the case where the dispersant is used, the preferable lower limit of the amount of the dispersant in the light-emitting layer is 1 part by weight relative to 100 parts by weight of the lanthanoid complex with a polydentate ligand containing a halogen atom in the light-emitting layer, and the preferable upper limit is 50 parts by weight. When the amount of the dispersant is within the range, the lanthanoid complex with a polydentate ligand containing a halogen atom can be homogeneously dispersed in the light-emitting layer. The lower limit of the amount of the dispersant is more preferably 3 parts by weight, still more preferably 5 parts by weight, and the upper limit is more preferably 30 parts by weight, still more preferably 25 parts by weight.

The light-emitting layer may further contain an ultraviolet absorber. The presence of an ultraviolet absorber in the light-emitting layer improves the lightfastness of the light-emitting layer.

In order to ensure that the interlayer film for laminated glass can produce an image with a much higher contrast, the upper limit of the amount of the ultraviolet absorber relative to 100 parts by weight of the thermoplastic resin in the light-emitting layer is preferably 1 part by weight, more preferably 0.5 parts by weight, still more preferably 0.2 parts by weight, particularly preferably 0.1 parts by weight.

Examples of the ultraviolet absorber include compounds having a malonic acid ester structure, compounds having an oxalic anilide structure, compounds having a benzotriazole structure, compounds having a benzophenone structure, compounds having a triazine structure, compounds having a benzoate structure, and compounds having a hindered amine structure.

The light-emitting layer may further contain a plasticizer.

Any plasticizer may be used, and examples include organic ester plasticizers such as monobasic organic acid esters and polybasic organic acid esters, and phosphoric acid plasticizers such as organic phosphoric acid plasticizers and organic phosphorous acid plasticizers. The plasticizer is preferably a liquid plasticizer.

The monobasic organic acid esters are not particularly limited, and examples include glycolesters obtainable by the reaction of a glycol (e.g. triethylene glycol, tetraethylene glycol, or tripropyleneglycol) and a monobasic organic acid (e.g. butyric acid, isobutyric acid, caproic acid, 2-ethylbutyric acid, heptanoic acid, n-octylic acid, 2-ethylhexanoic acid, pelargonic acid (n-nonylic acid), or decylic acid). In particular, triethylene glycol dicaproate, triethylene glycol di-2-ethylbutyrate, triethylene glycol di-n-octylate, and triethylene glycol di-2-ethylhexylate are preferred.

The polybasic organic acid esters are not particularly limited, and examples include ester compounds of a polybasic organic acid (e.g. adipic acid, sebacic acid, or azelaic acid) and a C4-C8 linear or branched alcohol. In particular, dibutyl sebacate, dioctyl azelate, dibutylcarbitol adipate, and the like are preferred.

The organic ester plasticizers are not particularly limited, and examples include triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethyl butyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, dihexyl adipate, dioctyl adipate, hexylcyclohexyl adipate, diisononyl adipate, heptyl nonyl adipate, dibutyl sebacate, oil-modified alkyd sebacate, mixtures of a phosphoric acid ester and an adipic acid ester, mixed adipic acid esters produced from an adipic acid ester, a C4-C9 alkyl alcohol, and a C4-C9 cyclic alcohol, and C6-C8 adipic acid esters such as hexyl adipate.

The organic phosphoric acid plasticizers are not particularly limited, and examples include tributoxyethyl phosphate, isodecylphenyl phosphate, and triisopropyl phosphate.

Preferred among the plasticizers is at least one selected from the group consisting of dihexyladipate (DHA), triethylene glycol di-2-ethylhexanoate (3GO), tetraethylene glycol di-2-ethylhexanoate (4GO), triethylene glycol di-2-ethylbutylate (3GH), tetraethylene glycol di-2-ethylbutylate (4GH), tetraethylene glycol di-n-heptanoate (4G7), and triethylene glycol di-n-heptanoate (3G7) .

The plasticizer is more preferably triethylene glycol di-2-ethylhexanoate (3GO), triethylene glycol di-2-ethylbutylate (3GH), tetraethylene glycol di-2-ethylhexanoate (4GO), or dihexyladipate (DHA), still more preferably tetraethylene glycol di-2-ethylhexanoate (4GO) or triethylene glycol di-2-ethylhexanoate (3GO), particularly preferably triethylene glycol di-2-ethylhexanoate because these plasticizers are less likely to undergo hydrolysis.

The amount of the plasticizer in the light-emitting layer is not particularly limited, but the preferable lower limit is 30 parts by weight, and the preferable upper limit is 100 parts by weight, relative to 100 parts by weight of the thermoplastic resin. When the amount of the plasticizer is 30 parts by weight or more, the interlayer film for laminated glass has low melt viscosity, which facilitates formation of the interlayer film for laminated glass. When the amount of the plasticizer is 100 parts by weight or less, an interlayer film for laminated glass having high transparency can be produced. The lower limit of the amount of the plasticizer is more preferably 35 parts by weight, still more preferably 45 parts by weight, particularly preferably 50 parts by weight. The upper limit of the amount of the plasticizer is more preferably 80 parts by weight, still more preferably 70 parts by weight, particularly preferably 63 parts by weight.

The light-emitting layer preferably contains an antioxidant to achieve high lightfastness.

Any antioxidant may be used, and examples include antioxidants having a phenolic structure, sulfur-containing antioxidants, and phosphorus-containing antioxidants.

The antioxidants having a phenolic structure refer to antioxidants having a phenolic skeleton. Examples of the antioxidants having a phenolic structure include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionat e]methane, 1,3,3-tris-(2-methyl-4-hydroxy-5-t-butylphenol)butane, 1,3,5-trimethyl-2,4,6-tris(3,5-di-t-butyl-4-hydroxybenzyl)b enzene, bis(3,3'-t-butylphenol)butyric acid glycol ester, and pentaerythritoltetrakis[3-(3,5-di-tert-butyl-4-hydroxypheny l)propionate]. Any of the antioxidants may be used alone, or two or more of these may be used in combination.

The light-emitting layer may contain an additive such as a photostabilizer, an antistatic agent, a blue dye, a blue pigment, a green dye, or a green pigment as needed.

The thickness of the light-emitting layer is not particularly limited, but the lower limit of the thickness is preferably 50 µm, and the upper limit of the thickness is preferably 1000 µm. When the light-emitting layer has a thickness within this range, it can emit light with sufficiently high contrast when irradiated with a light beam of a specific wavelength. The lower limit of the thickness of the light-emitting layer is more preferably 80 µm, still more preferably 90 µm, and the upper limit of the thickness is more preferably 500 µm, still more preferably 300 µm.

The light-emitting layer may be disposed on the entire or part of a face of the interlayer film for laminated glass of the second aspect of the present invention, and may be disposed on the entire or part of a face in a direction perpendicular to the thickness direction of the interlayer film for laminated glass of the second aspect of the present invention. In the case where the light-emitting layer is partially disposed, information can be controlled to be displayed only at the disposed part as light-emitting area without being displayed at the other part as non-light-emitting area.

The adhesive layer contains a thermoplastic resin and at least one metal salt selected from the group consisting of alkali metal salts, alkaline earth metal salts, and magnesium salts.

The adhesive layer serves to readily control the adhesive force of the interlayer film for laminated glass and maintain the penetration resistance of the interlayer film for laminated glass.

The thermoplastic resin contained in the adhesive layer may be the same thermoplastic resin as that contained in the light-emitting layer.

Like the light-emitting layer, the adhesive layer may further contain additives such as a plasticizer.

The at least one metal salt selected from the group consisting of alkali metal salts, alkaline earth metal salts, and magnesium salts in the adhesive layer serves as an adhesion modifier.

The metal salt is more preferably an alkali metal salt of a C1-C16 organic acid, an alkaline earth metal salt of a C1-C16 organic acid, or a magnesium salt of a C1-C16 organic acid, still more preferably an alkali metal salt of a C2-C16 organic acid, an alkaline earth metal salt of a C2-C16 organic acid, or a magnesium salt of a C2-C16 organic acid, particularly preferably a magnesium salt of a C2-C16 carboxylic acid or a potassium salt of a C2-C16 carboxylic acid.

The magnesium salt of a C2-C16 carboxylic acid and the potassium salt of a C2-C16 carboxylic acid are not particularly limited, and examples thereof include magnesium acetate, potassium acetate, magnesium propionate, potassium propionate, magnesium 2-ethylbutanoate, potassium 2-ethylbutanoate, magnesium 2-ethylhexanoate, and potassium 2-ethylhexanoate. The lower limit of the carbon number of the organic acid is preferably 1, more preferably 2, and the upper limit is preferably 10, more preferably 8.

The amount of the metal salt in the adhesive layer is not particularly limited. Preferably, the lower limit of the amount of the metal salt relative to 100 parts by weight of the thermoplastic resin is 0.0005 parts by weight, and the upper limit is preferably 0.05 parts by weight. When the amount of the metal salt is 0.0005 parts by weight or more, a laminated glass with a higher penetration resistance is produced. When the amount of the metal salt is 0.05 parts by weight or less, an interlayer film for laminated glass having a higher transparency is produced. The lower limit of the amount of the metal salt is more preferably 0.002 parts by weight, and the upper limit is more preferably 0.02 parts by weight.

The total amount of sodium, potassium, and magnesium in the adhesive layer is preferably 300 ppm or less, more preferably 200 ppm or less, still more preferably 150 ppm or less, particularly preferably 100 ppm or less. The amount of magnesium in the adhesive layer is preferably 150 ppm or less, more preferably 100 ppm or less, still more preferably 50 ppm or less, particularly preferably 30 ppm or less.

The adhesive layer contains sodium, potassium, and magnesium derived from a neutralizer or the like used in the synthesis of a thermoplastic resin in addition to the metal salt blended as an adhesion modifier.

The thickness of the adhesive layer is not particularly limited. The lower limit of the thickness is preferably 50 µm, and the upper limit is preferably 1000 µm. When the adhesive layer has a thickness within the above range, a laminated glass having a higher penetration resistance can be produced. The lower limit of the thickness of the adhesive layer is more preferably 100 µm, still more preferably 200 µm, and the upper limit is more preferably 900 µm, still more preferably 800 µm.

The interlayer film for laminated glass of the second aspect of the present invention may have a two-layer structure in which the light-emitting layer and the adhesive layer are stacked but preferably has a three-layer structure in which a first adhesive layer, the light-emitting layer, and a second adhesive layer are stacked in this order. Alternatively, the interlayer film may have a multilayer structure in which a different layer is interposed between the first adhesive layer and the light-emitting layer or between the second adhesive layer and the light-emitting layer.

An interlayer film for laminated glass with various functions can be produced by controlling the components constituting the light-emitting layer, the adhesive layer, and a different layer.

For example, in order to obtain the interlayer film for laminated glass of the second aspect of the present invention having sound-insulating properties, the amount of the plasticizer (hereinafter, also referred to as amount X) relative to 100 parts by weight of the thermoplastic resin in the light-emitting layer may be controlled to be more than the amount of the plasticizer (hereinafter, also referred to as amount Y) relative to 100 parts by weight of the thermoplastic resin in each of the first adhesive layer and the second adhesive layer. In this case, the amount X is more than the amount Y preferably by 5 parts by weight or more, more preferably by 10 parts by weight or more, still more preferably by 15 parts by weight or more. For allowing the interlayer film for laminated glass to have higher penetration resistance, the difference between the amount X and the amount Y is preferably 50 parts by weight or less, more preferably 40 parts by weight or less, still more preferably 35 parts by weight or less. The difference between the amount X and the amount Y is calculated based on the following formula: (difference between the amount X and the amount Y) = (the amount X - the amount Y)

The lower limit of the amount X is preferably 45 parts by weight, more preferably 50 parts by weight, still more preferably 55 parts by weight, and the upper limit of the amount X is preferably 80 parts by weight, more preferably 75 parts by weight, still more preferably 70 parts by weight. When the amount X is adjusted to the preferable lower limit or more, high sound-insulating properties can be exerted. When the amount X is adjusted to the preferable upper limit or less, the plasticizer can be prevented from bleeding out, so that a reduction in the transparency or the adhesiveness of the interlayer film for laminated glass can be prevented.

The lower limit of the amount Y is preferably 20 parts by weight, more preferably 30 parts by weight, still more preferably 35 parts by weight, and the upper limit of the amount Y is preferably 45 parts by weight, more preferably 43 parts by weight, still more preferably 41 parts by weight. When the amount Y is adjusted to the preferable lower limit or more, high penetration resistance can be exerted. When the amount Y is adjusted to the preferable upper limit or less, the plasticizer can be prevented from bleeding out, so that a reduction in the transparency or the adhesiveness of the interlayer film for laminated glass can be prevented.

In order to obtain the interlayer film for laminated glass of the second aspect of the present invention having sound-insulating properties, the thermoplastic resin in the light-emitting layer is preferably a polyvinyl acetal X. The polyvinyl acetal X can be prepared by acetalization of a polyvinyl alcohol with an aldehyde. Usually, the polyvinyl alcohol can be obtained by saponification of polyvinyl acetate. The lower limit of the average degree of polymerization of the polyvinyl alcohol is preferably 200, and the upper limit thereof is preferably 5000. When the average degree of polymerization of the polyvinyl alcohol is 200 or higher, the penetration resistance of the interlayer film for laminated glass to be obtained can be improved. When the average degree of polymerization of the polyvinyl alcohol is 5000 or lower, formability of the light-emitting layer can be ensured. The lower limit of the average degree of polymerization of the polyvinyl alcohol is more preferably 500, and the upper limit thereof is more preferably 4000. The average degree of polymerization of the polyvinyl alcohol is determined by a method in accordance with "Testing methods for polyvinyl alcohol" in JIS K 6726.

The lower limit of the carbon number of an aldehyde used for acetalization of the polyvinyl alcohol is preferably 4, and the upper limit thereof is preferably 6. When an aldehyde having 4 or more carbon atoms is used, a sufficient amount of the plasticizer can be stably contained so that excellent sound-insulating properties can be obtained. Moreover, bleeding out of the plasticizer can be prevented. When an aldehyde having 6 or less carbon atoms is used, synthesis of the polyvinyl acetal X is facilitated to ensure the productivity. The C4-C6 aldehyde may be a linear or branched aldehyde, and examples thereof include n-butyraldehyde and n-valeraldehyde.

The upper limit of the hydroxy group content of the polyvinyl acetal X is preferably 30 mol%. When the hydroxy group content of the polyvinyl acetal X is 30 mol% or less, the plasticizer can be contained in an amount needed for exhibiting sound-insulating properties. Thus, bleeding out of the plasticizer can be prevented. The upper limit of the hydroxy group content of the polyvinyl acetal X is more preferably 28 mol%, still more preferably 26 mol%, particularly preferably 24 mol%, and the lower limit thereof is preferably 10 mol%, more preferably 15 mol%, still more preferably 20 mol%. The hydroxy group content of the polyvinyl acetal X is a value in percentage (mol%) of the mol fraction obtained by dividing the amount of ethylene groups to which hydroxy groups are bonded by the amount of all the ethylene groups in the main chain. The amount of ethylene groups to which hydroxy groups are bonded can be determined by measuring the amount of ethylene groups to which hydroxy group are bonded in the polyvinyl acetal X by a method in accordance with "Testing methods for polyvinyl butyral" in JIS K 6728.

The lower limit of the acetal group content of the polyvinyl acetal X is preferably 60 mol%, and the upper limit thereof is preferably 85 mol%. When the acetal group content of the polyvinyl acetal X is 60 mol% or more, the light-emitting layer has higher hydrophobicity and can contain the plasticizer in an amount needed for exhibiting sound-insulating properties. Thus, bleeding out of the plasticizer and whitening can be prevented. When the acetal group content of the polyvinyl acetal X is 85 mol% or less, synthesis of the polyvinyl acetal X is facilitated to ensure the productivity. The lower limit of the acetal group content of the polyvinyl acetal X is more preferably 65 mol%, still more preferably 68 mol%. The acetal group content can be determined by measuring the amount of ethylene groups to which acetal groups are bonded in the polyvinyl acetal X by a method in accordance with "Testing methods of polyvinyl butyral" in JIS K 6728.

The lower limit of the acetyl group content of the polyvinyl acetal X is preferably 0.1 mol%, and the upper limit thereof is preferably 30 mol%. When the acetyl group content of the polyvinyl acetal X is 0.1 mol% or more, the plasticizer can be contained in an amount needed for exhibiting sound-insulating properties. Thus, bleeding out of the plasticizer can be prevented. When the acetyl group content of the polyvinyl acetal X is 30 mol% or less, the light-emitting layer has higher hydrophobicity to prevent whitening. The lower limit of the acetyl group content is more preferably 1 mol%, still more preferably 5 mol%, particularly preferably 8 mol%, and the upper limit thereof is more preferably 25 mol%, still more preferably 20 mol%. The acetyl group content is a value in percentage (mol%) of the mol fraction obtained by subtracting the amount of ethylene groups to which acetal groups are bonded and the amount of ethylene groups to which hydroxy group are bonded from the amount of all the ethylene groups in the main chain and dividing the resulting value by the amount of all the ethylene groups in the main chain.

The polyvinyl acetal X is especially preferably polyvinyl acetal with the acetyl group content of 8 mol% or more or polyvinyl acetal with the acetyl group content of less than 8 mol% and the acetal group content of 65 mol% or more. In this case, the light-emitting layer can readily contain the plasticizer in an amount needed for exhibiting sound-insulating properties. The polyvinyl acetal X is more preferably polyvinyl acetal having an acetyl group content of 8 mol% or more or polyvinyl acetal having an acetyl group content of less than 8 mol% and an acetal group content of 68 mol% or more.

In order to impart sound-insulating properties to the interlayer film for laminated glass of the second aspect of the present invention, the thermoplastic resin in the first and second adhesive layers is preferably a polyvinyl acetal Y. The polyvinyl acetal Y preferably contains a larger amount of hydroxy group than the polyvinyl acetal X.

The polyvinyl acetal Y can be prepared by acetalization of a polyvinyl alcohol with an aldehyde. The polyvinyl alcohol can be usually obtained by saponification of polyvinyl acetate. The lower limit of the average degree of polymerization of the polyvinyl alcohol is preferably 200, and the upper limit thereof is preferably 5000. When the average degree of polymerization of the polyvinyl alcohol is 200 or more, the penetration resistance of the interlayer film for laminated glass can be improved. When the average degree of polymerization of the polyvinyl alcohol is 5000 or less, the formability of the first and second adhesive layers can be ensured. The lower limit of the average degree of polymerization of the polyvinyl alcohol is more preferably 500, and the upper limit thereof is more preferably 4000.

The lower limit of the carbon number of an aldehyde used for acetalization of the polyvinyl alcohol is preferably 3, and the upper limit thereof is preferably 4. When the aldehyde having 3 or more carbon atoms is used, the penetration resistance of the interlayer film for laminated glass is improved. When the aldehyde having 4 or less carbon atoms is used, the productivity of the polyvinyl acetal Y is improved. The C3-C4 aldehyde may be a linear or branched aldehyde, and examples thereof include n-butyraldehyde.

The upper limit of the hydroxy group content of the polyvinyl acetal Y is preferably 33 mol%, and the lower limit thereof is preferably 28 mol%. When the hydroxy group content of the polyvinyl acetal Y is 33 mol% or less, whitening of the interlayer film for laminated glass can be prevented. When the hydroxy group content of the polyvinyl acetal Y is 28 mol% or more, the penetration resistance of the interlayer film for laminated glass can be improved.

The lower limit of the acetal group content of the polyvinyl acetal Y is preferably 60 mol%, and the upper limit thereof is preferably 80 mol%. When the acetal group content is 60 mol% or more, the plasticizer in an amount needed for exhibiting sufficient penetration resistance can be contained. When the acetal group content is 80 mol% or less, the adhesiveness between the different layer and glass can be ensured. The lower limit of the acetal group content is more preferably 65 mol%, and the upper limit thereof is more preferably 69 mol%.

The upper limit of the acetyl group content of the polyvinyl acetal Y is preferably 7 mol%. When the acetyl group content of the polyvinyl acetal Y is 7 mol% or less, the different layer has higher hydrophobicity, thereby preventing whitening. The upper limit of the acetyl group content is more preferably 2 mol%, and the lower limit thereof is preferably 0.1 mol%. The hydroxy group content, acetal group content, and acetyl group content of the polyvinyl acetal Y can be measured by the same methods as those described for the polyvinyl acetal X.

In order to obtain the interlayer film for laminated glass of the second aspect of the present invention having heat insulation properties, for example, one, two, or all of the light-emitting layer, the adhesive layer, and different layer(s) may contain a heat ray absorber.

The heat ray absorber is not particularly limited as long as it shields infrared rays. Preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

In the case where the light-emitting layer contains a heat ray absorber, the amount of the heat ray absorber in 100% by weight of the light-emitting layer is preferably 0.00001% by weight or more and 1% by weight or less. In the case where the different layer contains a heat ray absorber, the amount of the heat ray absorber in 100% by weight of the different layer is preferably 0.00001% by weight or more and 1% by weight or less. When the amount of the heat ray absorber in the light-emitting layer or the different layer is within the above preferable range, sufficient heat insulation properties can be exhibited.

The thickness of the interlayer film for laminated glass of the second aspect of the present invention is not particularly limited. The lower limit of the thickness is preferably 50 µm, more preferably 100 µm, and the upper limit of the thickness is preferably 2200 µm, more preferably 1700 µm, still more preferably 1000 µm, particularly preferably 900 µm.

The lower limit of the thickness of the entire interlayer film for laminated glass means the thickness of the thinnest part of the entire interlayer film for laminated glass. The upper limit of the thickness of the entire interlayer film for laminated glass means the thickness of the thickest part of the entire interlayer film for laminated glass. In the interlayer film for laminated glass of the second aspect of the present invention, the thickness of the light-emitting layer is not particularly limited, but the lower limit of the thickness is preferably 50 µm, and the upper limit of the thickness is preferably 1000 µm. When the light-emitting layer has a thickness within this range, it can emit light with sufficiently high contrast when irradiated with a light beam of a specific wavelength. The lower limit of the thickness of the light-emitting layer is more preferably 80 µm, still more preferably 90 µm, and the upper limit of the thickness is more preferably 760 µm, still more preferably 500 µm, particularly preferably 300 µm.

The interlayer film for laminated glass of the second aspect of the present invention may have a wedge-shaped cross section. In the case of the interlayer film for laminated glass having a wedge-shaped cross section, the wedge angle θ of the wedge shape can be controlled depending on the angle to attach the laminated glass, so that images can be displayed without double image phenomenon. For further preventing double image phenomenon, the lower limit of the wedge angle θ is preferably 0.1 mrad, more preferably 0.2 mrad, still more preferably 0.3 mrad, and the upper limit is preferably 1 mrad, more preferably 0.9 mrad. In the case where the interlayer film for laminated glass having a wedge-shaped cross section is produced by, for example, molding a resin composition by extrusion using an extruder, the interlayer may be thinnest at a region slightly inside of the edge on a thinner side thereof (specifically, when the distance from one side to the other side is X, the region of 0X to 0.2X from the edge on the thinner side toward the inside) and thickest at a region slightly inside of the edge on a thicker side thereof (specifically, when the distance from one side to the other side is X, the region of 0X to 0.2X from the edge on the thicker side toward the inside). Herein, such a shape is included in the wedge shape.

In the case of the interlayer film for laminated glass of the second aspect of the present invention having a wedge-shaped cross section, the cross-sectional shape of the entire interlayer film for laminated glass can be controlled to have a wedge shape with a certain wedge angle by, for example, controlling the thickness of the light-emitting layer to be within a certain range and modifying the cross-sectional shape of the adhesive layer.

Alternatively, the cross-sectional shape of the entire interlayer film for laminated glass can be controlled to have a wedge shape with a certain wedge angle by stacking a shape-adjusting layer in addition to the light-emitting layer and the adhesive layer, and modifying the cross-sectional shape of the shape-adjusting layer. The shape-adjusting layer may be stacked on only one face or both faces of the light-emitting layer. Further, multiple shape-adjusting layers may be stacked.

The light-emitting layer may have a wedge-shaped cross section or a rectangular cross section. Preferably, the difference between the maximum thickness and the minimum thickness of the light-emitting layer is 100 µm or less. In this case, images can be displayed with a certain level of luminance. The difference between the maximum thickness and the minimum thickness of the light-emitting layer is more preferably 95 µm or less, still more preferably 90 µm or less.

In the case of the interlayer film for laminated glass of the present invention having a wedge-shaped cross section, the thickness of the light-emitting layer is not particularly limited. The lower limit of the thickness is preferably 50 µm, and the upper limit of the thickness is preferably 700 µm. When the light-emitting layer has a thickness within the above range, sufficiently high contrast images can be displayed. The lower limit of the thickness of the light-emitting layer is more preferably 70 µm, still more preferably 80 µm, and the upper limit of the thickness is more preferably 400 µm, still more preferably 150 µm. The lower limit of the thickness of the light-emitting layer means the thickness of the thinnest part of the light-emitting layer. The upper limit of the thickness of the light-emitting layer means the thickness of the thickest part of the light-emitting layer.

In the case where the cross-sectional shape of the entire interlayer film for laminated glass is controlled to be a wedge shape with a certain wedge angle by modifying the cross sectional shape of the adhesive layer, the adhesive layer preferably has a wedge-shaped, triangular, trapezoidal, or rectangular cross section. The cross-sectional shape of the entire interlayer film for laminated glass can be controlled to be a wedge shape with a certain wedge angle by stacking an adhesive layer having a wedge-shaped, triangular, or trapezoidal cross section. Moreover, the cross-sectional shape of the entire interlayer film for laminated glass can be controlled using multiple adhesive layers in combination.

In the case where the cross-sectional shape of the entire interlayer film for laminated glass is controlled to be a wedge shape with a certain wedge angle by modifying the cross sectional shape of the adhesive layer, the thickness of the adhesive layer is not particularly limited. In view of the practical aspect and sufficient enhancement of the adhesive force and penetration resistance, the lower limit of the thickness of the adhesive layer is preferably 10 µm, more preferably 200 µm, still more preferably 300 µm, and the upper limit of the thickness is preferably 1000 µm, more preferably 800 µm. The lower limit of the thickness of the adhesive layer means the thickness of the thinnest part of the adhesive layer. The upper limit of the thickness of the adhesive layer means the thickness of the thickest part of the adhesive layer. When multiple adhesive layers are used in combination, the thickness of the adhesive layer means a total thickness of the adhesive layers.

Figs. 4 to 6 each illustrate a schematic view of an exemplary embodiment of the interlayer film for laminated glass of the second aspect of the present invention having a wedge-shaped cross section. For the convenience of illustration, the interlayer films for laminated glass and the layers forming the interlayer films for laminated glass in Figs. 4 to 6 are illustrated to have different thicknesses and wedge angles from those of the actual products.

Fig. 4 illustrates a cross section of an interlayer film for laminated glass 4 in the thickness direction. The interlayer film for laminated glass 4 has a two-layer structure in which an adhesive layer 42 is stacked on one face of a light-emitting layer 41 containing a light-emitting material. The entire interlayer film for laminated glass 4 is allowed to have a wedge shape with a wedge angle θ of 0.1 to 1 mrad by using the adhesive layer 42 having a wedge, triangular, or trapezoidal shape together with the light-emitting layer 41 having a rectangular shape.

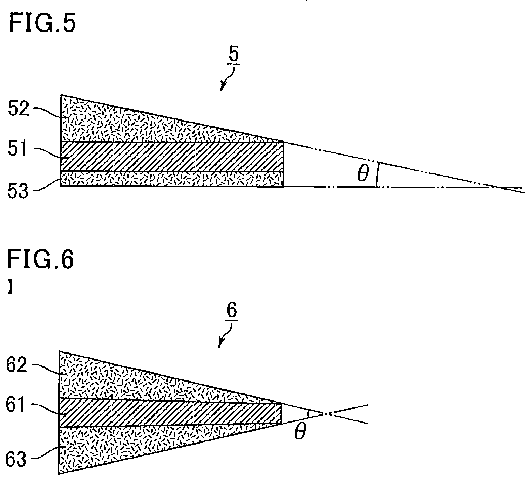

Fig. 5 illustrates a cross section of an interlayer film for laminated glass 5 in the thickness direction. The interlayer film for laminated glass 5 has a three-layer structure in which an adhesive layer 52 and an adhesive layer 53 are stacked on respective surfaces of a light-emitting layer 51 containing a light-emitting material. The entire interlayer film for laminated glass 5 is allowed to have a wedge shape with a wedge angle θ of 0.1 to 1 mrad by using the adhesive layer 52 having a wedge, triangular, or trapezoidal shape together with the light-emitting layer 51 and the adhesive layer 53 both having a rectangular shape with a certain thickness.

Fig. 6 illustrates a cross section of an interlayer film for laminated glass 6 in the thickness direction. The interlayer film for laminated glass 6 has a three-layer structure in which an adhesive layer 62 and an adhesive layer 63 are stacked on respective surfaces of a light-emitting layer 61 containing a light-emitting material. The entire interlayer film for laminated glass 6 is allowed to have a wedge shape with a wedge angle θ of 0.1 to 1 mrad by using the adhesive layer 61 having a moderate wedge shape with the difference between the maximum thickness and the minimum thickness of 100 µm or less and stacking the wedge-shaped adhesive layers 62 and 63.

The interlayer film for laminated glass of the second aspect of the present invention can be produced by any method. For example, it can be produced by a method including: preparing a resin composition for light-emitting layers by sufficiently mixing a thermoplastic resin with a plasticizer solution containing a plasticizer and a lanthanoid complex with a polydentate ligand containing a halogen atom; separately preparing a resin composition for first and second adhesive layers by sufficiently mixing a thermoplastic resin with a plasticizer solution containing the metal salt and a plasticizer; and co-extruding the resin composition for light-emitting layers and the resin composition for first and second adhesive layers using a coextruder, thereby giving an interlayer film for laminated glass in which a first adhesive layer, a light-emitting layer, and a second adhesive layer are stacked in this order.

Due to the light-emitting layer, the interlayer film for laminated glass of the second aspect of the present invention emits light under radiation of light at specific wavelengths. This feature allows for display of information with a high contrast. Examples of devices for radiation of light at specific wavelengths include a spot light source (LC-8 available from Hamamatsu Photonics K.K.), a xenon flush lamp (CW lamp available from Heraeus), and a black light (Carry Hand available from Iuchi Seieido Co., Ltd.).

A laminated glass including the interlayer film for laminated glass of the second aspect of the present invention between a pair of glass plates is also one aspect of the present invention.

The glass plates may be common transparent glass plates. Examples include plates of inorganic glass such as float glass plates, polished glass plates, figured glass plates, meshed glass plates, wired glass plates, colored glass plates, heat-absorbing glass plates, heat-reflecting glass plates, and green glass plates. An ultraviolet shielding glass plate including an ultraviolet shielding coat layer on a glass surface may also be used. However, this glass plate is preferably used on the side opposite to the side to be exposed to radiation of light at specific wavelengths. Other examples of the glass plates include organic plastic plates made of polyethylene terephthalate, polycarbonate, polyacrylate, or the like.

The glass plates may include two or more types of glass plates. For example, the laminated glass may be a laminate including the interlayer film for laminated glass of the present invention between a transparent float glass plate and a colored glass plate such as a green glass plate. The glass plates may include two or more glass plates with a different thickness.

### - Advantageous Effects of Invention

The present invention can provide an interlayer film for laminated glass capable of displaying images with a high luminous intensity when irradiated with a light beam, and a laminated glass including the interlayer film for laminated glass.

### BRIEF DESCRIPTION OF DRAWINGS

Fig. 1 illustrates a schematic view of an exemplary embodiment of the interlayer film for laminated glass of the first aspect of the present invention having a wedge-shaped cross section.
Fig. 2 illustrates a schematic view of an exemplary embodiment of the interlayer film for laminated glass of the first aspect of the present invention having a wedge-shaped cross section.
Fig. 3 illustrates a schematic view of an exemplary embodiment of the interlayer film for laminated glass of the first aspect of the present invention having a wedge-shaped cross section.
Fig. 4 illustrates a schematic view of an exemplary embodiment of the interlayer film for laminated glass of the second aspect of the present invention having a wedge-shaped cross section.
Fig. 5 illustrates a schematic view of an exemplary embodiment of the interlayer film for laminated glass of the second aspect of the present invention having a wedge-shaped cross section.
Fig. 6 illustrates a schematic view of an exemplary embodiment of the interlayer film for laminated glass of the second aspect of the present invention having a wedge-shaped cross section.

### DESCRIPTION OF EMBODIMENTS

Embodiments of the present invention are more specifically described below with reference to, but not limited to, examples.

### (Example 1)

### (1) Preparation of Eu(TFA)₃phen

Europium acetate (Eu(CH₃COO)₃) in an amount of 5 g (12.5 mmol) was dissolved in 50 mL of distilled water. To the solution was added 7 g (33.6 mmol) of trifluoroacetylacetone (TFA, CH₃COCH₂COCF₃) and stirred at room temperature for 3 hours. The precipitated solid was filtered, washed with water, and recrystallized using methanol and distilled water to give Eu(TFA)₃(H₂O)₂. Then, 5.77 g of the resulting complex (Eu(TFA)₃(H₂O)₂) and 2.5 g of 1,10-phenanthroline (phen) were dissolved in 100 mL of methanol, followed by heating under reflux for 12 hours. After 12 hours, methanol was distilled off under reduced pressure, thereby obtaining a white product. The white product powder was washed with toluene so that unreacted materials were removed by suction filtration. Subsequently, toluene was distilled off under reduced pressure to give a powder. Through recrystallization using a solvent mixture of toluene and hexane, Eu(TFA)₃phen was obtained.

### (2) Preparation of polyvinyl butyral

To a 2 m³ reactor fitted with a stirrer were charged 1700 kg of a 7.5% by mass aqueous solution of PVA (degree of polymerization: 1700, degree of saponification: 99 mol%), 74.6 kg of n-butyraldehyde, and 0.13 kg of 2,6-di-t-butyl-4-methyl phenol, and the entire mixture was cooled to 14°C. Subsequently, 99.44 L of 30% by mass nitric acid was added to the mixture to initiate the butyralization of PVA. Ten minutes after the end of the addition, the temperature was raised to 65°C over 90 minutes, followed by further reaction for 120 minutes. Thereafter, the temperature was lowered to room temperature, and the precipitated solid was filtered. The solid was washed ten times with a 10-fold amount (by mass) of ion exchange water. The washed solid was sufficiently neutralized using a 0.3% by mass sodium hydrogen carbonate aqueous solution and was then washed ten times with a 10-fold amount (by mass) of ion exchange water. The resulting solid was dehydrated and dried, thereby obtaining polyvinyl butyral 1 (hereinafter, also referred to as "PVB1") . The acetyl group content, degree of butyralization, and hydroxy group content of PVB1 were 0.9 mol%, 68.5 mol%, and 30.6 mol%, respectively.

### (3) Production of interlayer film for laminated glass and laminated glass

A luminous plasticizer solution was prepared by adding 0.2 parts by weight of the Eu(TFA)₃phen obtained above to 40 parts by weight of triethylene glycol di-2-ethylhexanoate (3GO) . The entire amount of the plasticizer solution was sufficiently kneaded with 100 parts by weight of PVB1 using a mixing roll to give a resin composition.

The resin composition was extruded with an extruder to provide an interlayer film for laminated glass (thickness: 760 µm).

The resulting interlayer film for laminated glass was interposed between a pair of clear glass plates (thickness: 2.5 mm, 5 cm in length × 5 cm in width) to prepare a laminate. The laminate was pressed under vacuum at 90°C for 30 minutes to be press-bonded using a vacuum laminator. The press-bonded laminate was subjected to further 20-minute press-bonding under 14 MPa at 140°C using an autoclave, thereby obtaining a laminated glass.

### (Example 2)

### (1) Preparation of Eu(TFA)₃dpphen

Eu(TFA)₃dpphen was obtained as in Example 1, except that 4,7-diphenyl phenanthroline was used instead of 1,10-phenanthroline.

### (2) Production of interlayer film for laminated glass and laminated glass

An interlayer film for laminated glass and a laminated glass were produced as in Example 1, except that the Eu(TFA)₃dpphen obtained above was used.

### (Example 3)

### (1) Preparation of Eu(HFA)₃phen

Eu(HFA)₃phen was prepared as in Example 1, except that hexafluoroacetylacetone was used instead of trifluoroacetylacetone.

### (2) Production of interlayer film for laminated glass and laminated glass

An interlayer film for laminated glass and a laminated glass were produced as in Example 1, except that the Eu(HFA)₃phen obtained above was used.

### (Example 4)

### (1) Preparation of Tb(TFA)₃phen

Tb(TFA)₃phen was prepared as in Example 1, except that terbium acetate was used instead of europium acetate.

### (2) Production of interlayer film for laminated glass and laminated glass

An interlayer film for laminated glass and a laminated glass were produced as in Example 1, except that the Tb(TFA)₃phen obtained above was used.

### (Example 5)

An interlayer film for laminated glass and a laminated glass were produced as in Example 2, except that magnesium chloride was blended in the resin composition so that the resulting interlayer film for laminated glass contained 30 ppm of magnesium.

### (Example 6)

An interlayer film for laminated glass and a laminated glass were produced as in Example 3, except that magnesium chloride was blended in the resin composition so that the resulting interlayer film for laminated glass contained 30 ppm of magnesium.

### (Example 7)

An interlayer film for laminated glass and a laminated glass were produced as in Example 4, except that magnesium chloride was blended in the resin composition so that the resulting interlayer film for laminated glass contained 30 ppm of magnesium.

### (Example 8)

An interlayer film for laminated glass and a laminated glass were produced as in Example 2, except that potassium chloride was blended in the resin composition so that the resulting interlayer film for laminated glass contained 30 ppm of potassium.

### (Example 9)

An interlayer film for laminated glass and a laminated glass were produced as in Example 2, except that sodium chloride was blended in the resin composition so that the resulting interlayer film for laminated glass contained 30 ppm of sodium.

### (Example 10)

An interlayer film for laminated glass and a laminated glass were produced as in Example 3, except that magnesium chloride was blended in the resin composition so that the resulting interlayer film for laminated glass contained 40 ppm of magnesium.

### (Example 11)

An interlayer film for laminated glass and a laminated glass were produced as in Example 4, except that magnesium chloride was blended in the resin composition so that the resulting interlayer film for laminated glass contained 40 ppm of magnesium.

### (Comparative Example 1)

An interlayer film for laminated glass and a laminated glass were produced as in Example 2, except that magnesium chloride was blended in the resin composition so that the resulting interlayer film for laminated glass contained 70 ppm of magnesium.

### (Comparative Example 2)

An interlayer film for laminated glass and a laminated glass were produced as in Example 2, except that sodium chloride was blended in the resin composition so that the resulting interlayer film for laminated glass contained 100 ppm of sodium.

### (Comparative Example 3)

An interlayer film for laminated glass and a laminated glass were produced as in Example 3, except that magnesium chloride was blended in the resin composition so that the resulting interlayer film for laminated glass contained 70 ppm of magnesium.

### (Comparative Example 4)

An interlayer film for laminated glass and a laminated glass were produced as in Example 3, except that sodium chloride was blended in the resin composition so that the resulting interlayer film for laminated glass contained 100 ppm of sodium.

### (Comparative Example 5)

An interlayer film for laminated glass and a laminated glass were produced as in Example 4, except that magnesium chloride was blended in the resin composition so that the resulting interlayer film for laminated glass contained 70 ppm of magnesium.

### (Comparative Example 6)

An interlayer film for laminated glass and a laminated glass were produced as in Example 4, except that sodium chloride was blended in the resin composition so that the resulting interlayer film for laminated glass contained 100 ppm of sodium.

### (Examples 12 to 17, Comparative Examples 7 and 8)

An interlayer film for laminated glass and a laminated glass were produced as in Example 1, except that the amounts of sodium chloride, potassium chloride, and magnesium chloride in the luminous plasticizer solution blended in the resin composition were changed so that the resulting interlayer film for laminated glass contained sodium, potassium, and magnesium in amounts shown in Table 3, and light-emitting particles shown in Table 3 were used in amounts shown in Table 3.

### (Evaluation)

The interlayer films for laminated glass and laminated glasses obtained in the examples and comparative examples were evaluated by the methods below. Tables 1 to 3 show the results.

### (1) Measurement of the amounts of metal components in interlayer films for laminated glass

The amounts of sodium, potassium, and magnesium in the interlayer films for laminated glass were measured with an ICP emission spectrometer (ICPE-9000) available from Shimadzu Corporation.

### (2) Evaluation of initial light-emitting properties

The laminated glasses each in a size of 5 cm in length × 5 cm in width were irradiated with light at an entire face in a dark room. The light was emitted from a high power xenon light source ("REX-250" available from Asahi Spectra Co., Ltd, irradiation wavelength: 405 nm) located 10 cm away from the face of the laminated glass in the perpendicular direction. The luminance at 45 degrees to the face of the laminated glass irradiated with light was measured with a luminance meter ("SR-3AR" available from Topcon Technohouse Corporation) disposed at a minimum distance of 35 cm away from the face of the laminated glass on the side at which the light was emitted.

**[Table 1]**

| | | Example 1 | Example 2 | Example 3 | Example 4 | Example 5 | Example 6 | Example 7 | Example 8 |
|---|---|---|---|---|---|---|---|---|---|
| Resin | phr | 100 | 100 | 100 | 100 | 100 | 100 | 100 | 100 |
| Plasticizer | phr | 40 | 40 | 40 | 40 | 40 | 40 | 40 | 40 |
| Eu complex | Structure | Eu(TFA)₃ phen | Eu(TFA)₃ dpphen | Eu(HFA)₃ phen | Tb(TFA)₃ phen | Eu(TFA)₃ dpphen | Eu(HFA)₃ phen | Tb(TFA)₃ phen | Eu(TFA)₃ dpphen |
| | phr | 0.2 | 0.2 | 0.2 | 0.2 | 0.2 | 0.2 | 0.2 | 0.2 |
| Sodium | ppm | 5 | 5 | 5 | 5 | 5 | 5 | 5 | 5 |
| Potassium | ppm | 5 | 5 | 5 | 5 | 5 | 5 | 5 | 30 |
| Magnesium | ppm | 0 | 0 | 0 | 0 | 30 | 30 | 30 | 0 |
| Total | ppm | 10 | 10 | 10 | 10 | 40 | 40 | 40 | 35 |
| Initial light-emitting properties | | 250 | 220 | 240 | 530 | 90 | 82 | 192 | 120 |

**[Table 2]**

| | | Example 9 | Example 10 | Example 11 | Comparative Example 1 | Comparative Example 2 | Comparative Example 3 | Comparative Example 4 | Comparative Example 5 | Comparative Example 6 |
|---|---|---|---|---|---|---|---|---|---|---|
| Resin | phr | 100 | 100 | 100 | 100 | 100 | 100 | 100 | 100 | 100 |
| Plasticizer | phr | 40 | 40 | 40 | 40 | 40 | 40 | 40 | 40 | 40 |
| Eu complex | Structure | Eu(TFA)₃ dpphen | Eu(HFA)₃ phen | Tb(TFA)₃ phen | Eu(TFA)₃ dpphen | Eu(TFA)₃ dpphen | Eu(HFA)₃ phen | Eu(HFA)₃ phen | Tb(TFA)₃ phen | Tb(TFA)₃ phen |
| | phr | 0.2 | 0.2 | 0.2 | 0.2 | 0.2 | 0.2 | 0.2 | 0.2 | 0.2 |
| Sodium | ppm | 30 | 5 | 5 | 5 | 100 | 5 | 100 | 5 | 100 |
| Potassium | ppm | 5 | 5 | 5 | 5 | 5 | 5 | 5 | 5 | 5 |
| Magnesium | ppm | 0 | 40 | 40 | 70 | 0 | 70 | 0 | 70 | 0 |
| Total | ppm | 35 | 50 | 50 | 80 | 105 | 80 | 105 | 80 | 105 |
| Initial light-emitting properties | | 110 | 77 | 117 | 10 | 12 | 11 | 24 | 43 | 47 |

**[Table 3]**

| | | Example 12 | Example 13 | Example 14 | Example 15 | Example 16 | Example 17 | Comparative Example 7 | Comparative Example 8 |
|---|---|---|---|---|---|---|---|---|---|
| Resin | phr | 100 | 100 | 100 | 100 | 100 | 100 | 100 | 100 |
| Plasticizer | phr | 40 | 40 | 40 | 40 | 40 | 40 | 40 | 40 |
| Eu complex | Structure | Eu(HFA)₃ phen | Eu(HFA)₃ phen | Eu(HFA)₃ phen | Tb(TFA)₃ phen | Tb(TFA)₃ phen | Tb(TFA)₃ phen | Eu(HFA)₃ phen | Tb(TFA)₃ phen |
| | phr | 0.6 | 0.6 | 0.6 | 0.6 | 0.6 | 0.6 | 0.6 | 0.6 |
| Sodium | ppm | 5 | 5 | 5 | 5 | 5 | 5 | 5 | 5 |
| Potassium | ppm | 5 | 5 | 5 | 5 | 5 | 5 | 5 | 5 |
| Magnesium | ppm | 0 | 30 | 40 | 0 | 30 | 40 | 70 | 70 |
| Total | ppm | 10 | 40 | 50 | 10 | 40 | 50 | 80 | 80 |
| Initial light-emitting properties | | 708 | 260 | 220 | 1420 | 630 | 597 | 34 | 42 |

### (Example 18)

To 40 parts by weight of triethylene glycol di-2-ethylhexanoate (3GO) was added 0.2 parts by weight of the Eu(HFA)₃phen obtained in Example 3. Further, tin-doped indium oxide particles (ITO particles) as a heat ray absorber was added in an amount of 0.15% by weight in 100% by weight of an interlayer film to be obtained so that a luminous plasticizer solution was prepared. The entire amount of the plasticizer solution was sufficiently kneaded with 100 parts by weight of the obtained polyvinyl butyral 1 using a mixing roll to give a resin composition.

The resin composition was extruded with an extruder to provide an interlayer film for laminated glass (thickness: 760 µm).

The resulting interlayer film for laminated glass was interposed between a pair of clear glass plates (thickness: 2.5 mm, 5 cm in length × 5 cm in width) to prepare a laminate. The laminate was pressed under vacuum at 90°C for 30 minutes to be press-bonded using a vacuum laminator. The press-bonded laminate was subjected to further 20-minute press-bonding under 14 MPa at 140°C using an autoclave, thereby obtaining a laminated glass.

### (Example 19)

To 40 parts by weight of triethylene glycol di-2-ethylhexanoate (3GO) was added 0.2 parts by weight of the Eu(HFA)₃phen obtained in Example 3. Further, cesium-doped tungsten oxide (Cs0.33WO3) particles (CWO particles) as a heat ray absorber was added in an amount of 0.05% by weight in 100% by weight of an interlayer film to be obtained so that a luminous plasticizer solution was prepared. The entire amount of the plasticizer solution was sufficiently kneaded with 100 parts by weight of the obtained polyvinyl butyral 1 using a mixing roll to give a resin composition.

The resin composition was extruded with an extruder to provide an interlayer film for laminated glass (thickness: 760 µm).

The resulting interlayer film for laminated glass was interposed between a pair of clear glass plates (thickness: 2.5 mm, 5 cm in length × 5 cm in width) to prepare a laminate. The laminate was pressed under vacuum at 90°C for 30 minutes to be press-bonded using a vacuum laminator. The press-bonded laminate was subjected to further 20-minute press-bonding under 14 MPa at 140°C using an autoclave, thereby obtaining a laminated glass.

### (Examples 20 and 21)

An interlayer film for laminated glass and a laminated glass were produced as in Example 18, except that the light-emitting particles shown in Table 4 were used, and the amount of the heat ray absorber was changed as shown in Table 4.

### (Evaluation)

The interlayer films for laminated glass and laminated glasses obtained in the examples and comparative examples were evaluated by the methods below. Table 4 shows the results.

### (1) Measurement of the amounts of metal components in interlayer films for laminated glass

The amounts of sodium, potassium, and magnesium in the interlayer films for laminated glass were measured with an ICP emission spectrometer (ICPE-9000) available from Shimadzu Corporation. The specific procedure of the measurement is as follows. An amount of 0.3 g of each interlayer film for laminated glass as a sample was put in an insert container together with 6 mg of nitric acid. Separately, 6 mg of ultrapure water and 1 mg of hydrogen peroxide were put in a dissolution vessel. The insert container was placed in the dissolution vessel, and the vessel was capped.

The dissolution vessel was heated at 200°C for 15 minutes using a microwave sample digestion system "ETHOS One" available from Milestone General K.K. Subsequently, the content of the insert container was diluted with ultrapure water with a resistivity of 18.2 MΩ·cm at 25°C to prepare a test solution. The metal contents of the test solution were analyzed in a closed system using an ICP emission spectrometer (ICPE-9000) available from Shimadzu Corporation. The amounts of metals in the interlayer film for laminated glass were calculated from the determined metal contents.

### (2) Evaluation of initial light-emitting properties

The laminated glasses each in a size of 5 cm in length × 5 cm in width were irradiated with light at an entire face in a dark room. The light was emitted from a high power xenon light source ("REX-250" available from Asahi Spectra Co., Ltd, irradiation wavelength: 405 nm) located 10 cm away from the face of the laminated glass in the perpendicular direction. The luminance at 45 degrees to the face of the laminated glass irradiated with light was measured with a luminance meter ("SR-3AR" available from Topcon Technohouse Corporation) disposed at a minimum distance of 35 cm away from the face of the laminated glass on the side at which the light was emitted.

### (Evaluation of heat insulation properties)

The laminated glasses obtained in Examples 18 to 21 were each measured for the transmittance and reflectance of light with a wavelength of 300 to 2500 nm in conformity with ISO 13837 using a spectrophotometer (U-4100 available from Hitachi High-Technologies Corporation), and calculated the Tts from the results.

**[Table 4]**

| | | Example 18 | Example 19 | Example 20 | Example 21 |
|---|---|---|---|---|---|
| Resin | phr | 100 | 100 | 100 | 100 |
| Plasticizer | phr | 40 | 40 | 40 | 40 |
| Eu complex | Structure | Eu(HFA)₃ phen | Eu(HFA)₃ phen | Eu(HFA)₃ phen | Tb(TFA)₃ phen |
| | phr | 0.2 | 0.2 | 0.2 | 0.2 |
| Heat-insulating particles | Type | ITO | CWO | ITO | ITO |
| | wt% | 0.15 | 0.05 | 0.5 | 0.15 |
| Sodium | ppm | 5 | 5 | 5 | 5 |
| Potassium | ppm | 5 | 5 | 5 | 5 |
| Magnesium | ppm | 0 | 0 | 0 | 0 |
| Total | ppm | 10 | 10 | 10 | 10 |
| Initial light-emitting properties | | 208 | 202 | 203 | 505 |
| Heat insulation properties (Tts) | | 74.7 | 67.2 | 69.2 | 74.2 |

### (Example 22)

### (1) Preparation of Eu(TFA)₃phen

Europium acetate (Eu(CH₃COO)₃) in an amount of 5 g (12.5 mmol) was dissolved in 50 mL of distilled water. To the solution was added 7 g (33.6 mmol) of trifluoroacetylacetone (TFA, CH₃COCH₂COCF₃) and stirred at room temperature for 3 hours. The precipitated solid was filtered, washed with water, and recrystallized using methanol and distilled water to give Eu(TFA)₃(H₂O)₂. Then, 5.77 g of the (Eu(TFA)₃(H₂O)₂) and 2.5 g of 1,10-phenanthroline (phen) were dissolved in 100 mL of methanol, followed by heating under reflux for 12 hours. After 12 hours, methanol was distilled off under reduced pressure, thereby obtaining a white product. The white product powder was washed with toluene so that unreacted materials were removed by suction filtration. Subsequently, toluene was distilled off under reduced pressure to give a powder. Through recrystallization using a solvent mixture of toluene and hexane, Eu(TFA)₃phen was obtained.

### (2) Resin composition for light-emitting layers

To a 2 m³ reactor fitted with a stirrer were charged 1700 kg of a 7.5% by mass aqueous solution of PVA (degree of polymerization: 2400, degree of saponification: 88 mol%), 119.4 kg of n-butyraldehyde, and 0.13 kg of 2, 6-di-t-butyl-4-methyl phenol, and the entire mixture was cooled to 14 °C. Subsequently, 99.44 L of 30% by mass nitric acid was added to the mixture to initiate the butyralization of PVA. Ten minutes after the end of the addition, the temperature was raised to 65°C over 90 minutes, followed by further reaction for 120 minutes. Thereafter, the temperature was lowered to room temperature, and the precipitated solid was filtered. The solid was washed ten times with a 10-fold amount (by mass) of ion exchange water (washing before neutralization). The washed solid was sufficiently neutralized using a 0.3% by mass sodium hydrogen carbonate aqueous solution and was then washed ten times with a 10-fold amount (by mass) of ion exchange water (washing after neutralization) . The resulting solid was dehydrated and dried, thereby obtaining polyvinyl butyral 2 (hereinafter, also referred to as "PVB2") . The acetyl group content, butyral group content, and hydroxy group content of PVB2 were 13 mol%, 65 mol%, and 22 mol%, respectively. A luminous plasticizer solution was prepared by adding 0.2 parts by weight of particles of the Eu(TFA)₃phen to 40 parts by weight of triethylene glycol di-2-ethylhexanoate (3GO). The entire amount of the plasticizer solution was sufficiently kneaded with 100 parts by weight of polyvinyl butyral 2 using a mixing roll to give a resin composition for light-emitting layers.

### (3) Resin composition for first and second adhesive layers

A plasticizer solution was prepared by adding magnesium acetate as an adhesion modifier to 100 parts by weight of triethylene glycol di-2-ethylhexanoate (3GO). The entire amount of the plasticizer solution was sufficiently kneaded with 100 parts by weight of PVB1 prepared in Example 1 using a mixing roll to give a resin composition for first and second adhesive layers. Here, magnesium acetate was added to triethylene glycol di-2-ethylhexanoate (3GO) so that the resulting first and second adhesive layers each contained 40 ppm of magnesium.

### (4) Production of interlayer film for laminated glass

The resin composition for light-emitting layers and the resin composition for first and second adhesive layers were co-extruded using a coextruder to prepare an interlayer film for laminated glass in which a first adhesive layer, a light-emitting layer, and a second adhesive layer were stacked in this order. The light-emitting layer had a thickness of 100 µm, the first and second adhesive layers each had a thickness of 350 µm, and the interlayer film for laminated glass had a thickness of 800 µm.

### (5) Production of laminated glass

The resulting interlayer film for laminated glass was interposed between a pair of clear glass plates (thickness: 2.5 mm, 5 cm in length × 5 cm in width) to prepare a laminate. The laminate was pressed under vacuum at 90°C for 30 minutes to be press-bonded using a vacuum laminator. The press-bonded laminate was subjected to further 20-minute press-bonding under 14 MPa at 140°C using an autoclave, thereby obtaining a laminated glass.

### (Production of laminated glass for evaluation of penetration resistance)

The resulting interlayer film for laminated glass was interposed between a pair of clear glass plates (thickness : 2.5 mm, 30 cm in length × 30 cm in width) to prepare a laminate. The laminate was pressed under vacuum at 90°C for 30 minutes to be press-bonded using a vacuum laminator. The press-bonded laminate was subjected to further 20-minute press-bonding under 14 MPa at 140°C using an autoclave. The portion of the interlayer film protruding from the glass plates was cut off, thereby obtaining a laminated glass for evaluation of penetration resistance.

### (Example 23)

### (1) Preparation of Eu(TFA)₃dpphen

Eu(TFA)₃dpphen was obtained as in Example 22, except that 4,7-diphenyl phenanthroline was used instead of 1,10-phenanthroline.

### (2) Production of interlayer film for laminated glass and laminated glass

An interlayer film for laminated glass, a laminated glass, and a laminated glass for evaluation of penetration resistance were produced as in Example 22, except that particles of the Eu(TFA)₃dpphen obtained above were used.

### (Example 24)

### (1) Preparation of Eu(HFA)₃phen

Eu(HFA)₃phen was prepared as in Example 22, except that hexafluoroacetylacetone was used instead of trifluoroacetylacetone.

### (2) Production of interlayer film for laminated glass and laminated glass

An interlayer film for laminated glass, a laminated glass, and a laminated glass for evaluation of penetration resistance were produced as in Example 22, except that particles of the Eu(HFA)₃phen obtained above were used.

### (Examples 25 to 34, Comparative Examples 9 to 13, and Reference Example 1)

An interlayer film for laminated glass, a laminated glass, and a laminated glass for evaluation of penetration resistance were produced as in Example 22, except that: the amounts of sodium chloride, potassium chloride, and magnesium chloride in the luminous plasticizer solution blended in the resin composition for light-emitting layers and the amount of magnesium acetate in the plasticizer solution blended in the resin composition for first and second adhesive layers were changed so that the resulting light-emitting layer and adhesive layers contained sodium, potassium, and magnesium in amounts shown in Table 5, 6 or 7; the europium complex shown in Table 5, 6, or 7 was used; and the amount of the plasticizer was changed as shown in Table 5, 6, or 7.

### (Evaluation)

The interlayer films for laminated glass and laminated glasses obtained in the examples, comparative examples, and reference example were evaluated by the methods below. Tables 5 to 7 show the results.

### (1) Measurement of the amounts of metals in light-emitting layer and adhesive layers

The resin composition prepared for producing the interlayer film for laminated glass was extruded with an extruder to prepare a light-emitting layer and an adhesive layer each having a single layer structure as samples for measuring the metal contents thereof.

The metal contents of the light-emitting layer and adhesive layer were measured with an ICP emission spectrometer (ICPE-9000) available from Shimadzu Corporation. The specific procedure of the measurement is as follows. An amount of 0.3 g of the light-emitting layer and the adhesive layer as a sample was put in an insert container together with 6 mg of nitric acid. Separately, 6 mg of ultrapure water and 1 mg of hydrogen peroxide were put in a dissolution vessel. The insert container was placed in the dissolution vessel, and the vessel was capped.

The dissolution vessel was heated at 200°C for 15 minutes using a microwave sample digestion system "ETHOS One" available from Milestone General K.K. Subsequently, the content of the insert container was diluted with ultrapure water with a resistivity of 18.2 MΩ·cm at 25°C to prepare a test solution. The metal contents of the test solution were analyzed in a closed system using an ICP emission spectrometer (ICPE-9000) available from Shimadzu Corporation. The amounts of metals in the light-emitting layer and adhesive layer were calculated from the determined metal contents.

### (2) Evaluation of initial light-emitting properties

The laminated glasses each in a size of 5 cm in length × 5 cm in width were irradiated with light at an entire face in a dark room. The light was emitted from a high power xenon light source ("REX-250" available from Asahi Spectra Co., Ltd, irradiation wavelength: 405 nm) located 10 cm away from the face of the laminated glass in the perpendicular direction. The luminance at 45 degrees to the face of the laminated glass irradiated with light was measured with a luminance meter ("SR-3AR" available from Topcon Technohouse Corporation) disposed at a minimum distance of 35 cm away from the face of the laminated glass on the side at which the light was emitted.

### (3) Evaluation of penetration resistance (Measurement of pummel value of interlayer film for laminated glass)

The laminated glasses for evaluation of penetration resistance were left standing at -18°C ± 0.6°C for 16 hours. A center portion (150 mm in length × 150 mm in width) of each laminated glass was shattered with a hammer having a 0.45 kg head into glass pieces with a size of 6 mm or smaller. Areas of the films from which glass pieces fell off were measured to determine the degree of exposure, and a pummel value was assigned based on the classifications indicated in Table 8. The laminated glasses with a pummel value of 1 to 7 were evaluated as "○ (good)", while the laminated glasses with a pummel value of 0 or 8 were evaluated as "× (poor)".

**[Table 5]**

| | | | Example 22 | Example 23 | Example 24 | Example 25 | Example 26 . | Example 27 | Example 28 |
|---|---|---|---|---|---|---|---|---|---|
| Light-emitting layer | Resin (PVB) | Type | PVB2 | PVB2 | PVB2 | PVB2 | PVB2 | PVB2 | PVB2 |
| | | phr | 100 | 100 | 100 | 100 | 100 | 100 | 100 |
| | Plasticizer (3GO) | phr | 40 | 40 | 40 | 60 | 40 | 40 | 40 |
| | Eu complex | Structure | Eu(TFA)₃ phen | Eu(TFA)₃ dpphen | Eu(HFA)₃ phen | Eu(TFA)₃ dpphen | Eu(TFA)₃ dpphen | Eu(TFA)₃ dpphen | Eu(TFA)₃ dpphen |
| | | phr | 0.2 | 0.2 | 0.2 | 0.2 | 0.2 | 0.2 | 0.2 |
| | Metal contents (ppm) | Na | 5 | 5 | 5 | 20 | 5 | 5 | 5 |
| | | K | 5 | 5 | 5 | 20 | 5 | 5 | 5 |
| | | Mg | 0 | 0 | 0 | 0 | 0 | 0 | 0 |
| | | Total | 10 | 10 | 10 | 40 | 10 | 10 | 10 |
| Adhesive layer | Resin (PVB) | Type | PVB1 | PVB1 | PVB1 | PVB1 | PVB1 | PVB1 | PVB1 |
| | | phr | 100 | 100 | 100 | 100 | 100 | 100 | 100 |
| | Plasticizer (3GO) | phr | 100 | 100 | 100 | 100 | 100 | 100 | 100 |
| | Metal contents (ppm) | Na | 5 | 5 | 5 | 5 | 5 | 5 | 5 |
| | | K | 5 | 5 | 5 | 5 | 5 | 5 | 5 |
| | | Mg | 40 | 40 | 40 | 40 | 50 | 70 | 100 |
| | | Total | 50 | 50 | 50 | 50 | 60 | 80 | 110 |
| Initial light-emitting properties | | | 42 | 37 | 40 | 32 | 35 | 34 | 33 |
| Pummel | | | 5 | 5 | 5 | 5 | 4 | 3 | 2 |

**[Table 6]**

| | | | Example 29 | Example 30 | Example 31 | Example 32 | Example 33 | Example 34 |
|---|---|---|---|---|---|---|---|---|
| Light-emitting layer | Resin (PVB) | Type | PVB2 | PVB2 | PVB2 | PVB2 | PVB2 | PVB2 |
| | | phr | 100 | 100 | 100 | 100 | 100 | 100 |
| | Plasticizer (3GO) | phr | 40 | 40 | 40 | 40 | 60 | 60 |
| | Eu complex | Structure | Eu(TFA)₃ phen | Eu(TFA)₃ dpphen | Eu(HFA)₃ phen | Tb(TFA)₃ phen | Eu(HFA)₃ phen | Tb(TFA)₃ phen |
| | | phr | 0.2 | 0.2 | 0.2 | 0.2 | 0.2 | 0.2 |
| | Metal contents (ppm) | Na | 5 | 5 | 5 | 5 | 20 | 20 |
| | | K | 5 | 5 | 5 | 5 | 20 | 20 |
| | | Mg | 0 | 0 | 0 | 0 | 0 | 0 |
| | | Total | 10 | 10 | 10 | 10 | 40 | 40 |
| Adhesive layer | Resin (PVB) | Type | PVB1 | PVB1 | PVB1 | PVB1 | PVB1 | PVB1 |
| | | phr | 100 | 100 | 100 | 100 | 100 | 100 |
| | Plasticizer (3GO) | phr | 40 | 40 | 40 | 40 | 40 | 40 |
| | Metal contents (ppm) | Na | 5 | 5 | 5 | 5 | 5 | 5 |
| | | K | 5 | 5 | 5 | 5 | 5 | 5 |
| | | Mg | 40 | 40 | 40 | 40 | 40 | 40 |
| | | Total | 50 | 50 | 50 | 50 | 50 | 50 |
| Initial light-emitting properties | | | 43 | 40 | 41 | 101 | 36 | 94 |
| Pummel | | | 5 | 5 | 5 | 5 | 5 | 5 |

**[Table 7]**

| | | | Comparative Example 9 | Comparative Example 10 | Comparative Example 11 | Comparative Example 12 | Comparative Example 13 | Reference Example 1 |
|---|---|---|---|---|---|---|---|---|
| Light-emitting layer | Resin (PVB) | Type | PVB1 | PVB1 | PVB1 | PVB1 | PVB1 | PVB1 |
| | | phr | 100 | 100 | 100 | 100 | 100 | 100 |
| | Plasticizer (3GO) | phr | 40 | 40 | 40 | 40 | 40 | 60 |
| | Eu complex | Structure | Eu(TFA)₃ dpphen | Eu(TFA)₃ dpphen | Eu(TFA)₃ dpphen | Eu(HFA)₃ phen | Tb(TFA)₃ phen | Eu(TFA)₃ dpphen |
| | | phr | 0.2 | 0.2 | 0.2 | 0.2 | 0.2 | 0.2 |
| | Metal contents (ppm) | Na | 5 | 5 | 5 | 5 | 5 | 20 |
| | | K | 5 | 5 | 5 | 5 | 5 | 20 |
| | | Mg | 50 | 100 | 50 | 50 | 50 | 0 |
| | | Total | 60 | 110 | 60 | 60 | 60 | 40 |
| Adhesive layer | Resin (PVB) | Type | PVB1 | PVB1 | PVB1 | PVB1 | PVB1 | PVB1 |
| | | phr | 100 | 100 | 100 | 100 | 100 | 100 |
| | Plasticizer (3GO) | phr | 100 | 100 | 40 | 40 | 40 | 100 |
| | Metal contents (ppm) | Na | 5 | 5 | 5 | 5 | 5 | 5 |
| | | K | 5 | 5 | 5 | 5 | 5 | 5 |
| | | Mg | 30 | 30 | 30 | 30 | 30 | 0 |
| | | Total | 40 | 40 | 40 | 40 | 40 | 10 |
| Initial light-emitting properties | | | 11 | 5 | 10 | 11 | 11 | 60 |
| Pummel | | | 3 | 3 | 5 | 5 | 5 | 8 |

**[Table 8]**

| Degree of exposure of interlayer film (area%) | Pummel value |
|---|---|
| 90<Degree of exposure≦100 | 0 |
| 85<Degree of exposure≦90 | 1 |
| 60<Degree of exposure≦85 | 2 |
| 40<Degree of exposure≦60 | 3 |
| 20<Degree of exposure≦40 | 4 |
| 10<Degree of exposure≦20 | 5 |
| 5<Degree of exposure ≦10 | 6 |
| 2<Degree of exposure≦5 | 7 |
| Degree of exposure ≦2 | 8 |

### (Example 35)

### (Preparation of resin composition for light-emitting layers)

A luminous plasticizer solution was prepared by adding 0.5 parts by weight of the Eu(HFA)₃phen obtained in Example 3 to 40 parts by weight of triethylene glycol di-2-ethylhexanoate (3GO). The entire amount of the plasticizer solution was sufficiently kneaded with 100 parts by weight of polyvinyl butyral 1 using a mixing roll to give a resin composition for light-emitting layers.

### (Preparation of resin composition for shape-adjusting layers)

A plasticizer solution was prepared by adding magnesium acetate as an adhesion modifier to 40 parts by weight of triethylene glycol di-2-ethylhexanoate (3GO). The entire amount of the plasticizer solution was sufficiently kneaded with 100 parts by weight of polyvinyl butyral 1 prepared in Example 1 using a mixing roll to give a resin composition for shape-adjusting layers. Here, magnesium acetate was added to triethylene glycol di-2-ethylhexanoate (3GO) so that the resulting shape-adjusting layer contained 40 ppm of magnesium.

### (Production of interlayer film for laminated glass and laminated glass)

The resin composition for light-emitting layers and the resin composition for shape-adjusting layers were co-extruded using a coextruder to prepare an interlayer film for laminated glass shown in Fig. 3 having a three-layer structure in which a shape-adjusting layer, a light-emitting layer, and a shape-adjusting layer were stacked in this order. The minimum distance from one edge to the other edge of the obtained interlayer film in a direction perpendicular to the extrusion direction was measured to be 1 m.

The light-emitting layer of the resulting interlayer film for laminated glass had a wedge-shaped cross section with a minimum thickness of 100 µm and a maximum thickness of 200 µm. The entire interlayer film for laminated glass had a minimum thickness of 800 µm, a maximum thickness of 1250 µm, and a wedge angle θ of 0.45 mrad. The interlayer film for laminated glass was thinnest at one edge and thickest at the other edge. The minimum thickness and maximum thickness were measured by observation using an optical microscope.

The interlayer film was interposed between two transparent float glass plates (1000 mm in length × 300 mm in width × 2.5 mm in thickness) to prepare a laminate. The laminate was temporarily press-bonded using a heating roll at 230°C. The temporarily press-bonded laminate was press-bonded by a roll heat method using an autoclave under a pressure of 1.2 MPa at 135°C for 20 minutes, thereby obtaining a laminated glass (1000 mm in length × 300 mm in width).

### (Production of laminated glass for luminance measurement)

The interlayer film (thin part) having a length of 10 cm and a width of 10 cm was cut out in a manner the center thereof was 10 cm from one edge and on the line with the minimum distance from the one edge to the other edge. The resulting interlayer film (thin part) was interposed between two transparent float glass plates (5 cm in length × 5 cm in width × 2.5 mm in thickness) to prepare a laminate. The laminate was temporarily press-bonded using a heating roll at 230°C. The temporarily press-bonded laminate was press-bonded by a roll heat method using an autoclave under a pressure of 1.2 MPa at 135°C for 20 minutes, thereby obtaining a laminated glass for luminance measurement (5 cm in length × 5 cm in width).

### (Examples 37 and 38, and Comparative Examples 14 and 15)

An interlayer film for laminated glass, a laminated glass, and a laminated glass for luminance measurement were produced as in Example 35, except that: the amounts of sodium chloride, potassium chloride, and magnesium chloride in the resin composition for light-emitting layers were changed so that the resulting light-emitting layer contained sodium, potassium, and magnesium in amounts shown in Table 9; and the europium complex shown in Table 9 was used.

### (Example 39)

### (Preparation of resin composition for light-emitting layers)

A luminous plasticizer solution was prepared by adding 0.2 parts by weight of the Eu(HFA)₃phen obtained in Example 3 to 40 parts by weight of triethylene glycol di-2-ethylhexanoate (3GO). The entire amount of the plasticizer solution was sufficiently kneaded with 100 parts by weight of polyvinyl butyral 1 using a mixing roll to give a resin composition for light-emitting layers.

### (Preparation of resin composition for first and second resin layers)

A plasticizer solution was prepared by adding magnesium acetate as an adhesion modifier to 40 parts by weight of triethylene glycol di-2-ethylhexanoate (3GO). The entire amount of the plasticizer solution was sufficiently kneaded with 100 parts by weight of polyvinyl butyral 1 prepared in Example 1 using a mixing roll to give a resin composition for first and second resin layers. Here, magnesium acetate was added to triethylene glycol di-2-ethylhexanoate (3GO) so that the resulting first and second resin layers each contained 40 ppm of magnesium.

### (Preparation of resin composition for sound insulating layers)

A resin composition for sound insulating layers was prepared by sufficiently kneading 60 parts by weight of triethylene glycol di-2-ethylhexanoate (3GO) and 100 parts by weight of polyvinyl butyral 2 using a mixing roll.

### (Production of interlayer film for laminated glass and laminated glass)

The resin composition for light-emitting layers was extruded into a single layer using an extruder to prepare a light-emitting layer (thickness: 760 µm).

The resin composition for first resin layers and second resin layers and the resin composition for sound insulating layers were co-extruded using a coextruder to prepare a laminate having a three-layer structure as shown in Fig. 3 in which a first resin layer, a sound insulating layer, and a second resin layer were stacked in this order. The light-emitting layer was stacked on the outer surface of the second resin layer of the laminate, thereby obtaining an interlayer film for laminated glass. The minimum distance from one edge to the other edge of the obtained interlayer film in a direction perpendicular to the extrusion direction was measured to be 1 m.

In the resulting interlayer film for laminated glass, the sound insulating layer had a wedge-shaped cross section with a minimum thickness of 100 µm and a maximum thickness of 200 pm; the first resin layer had a wedge-shaped cross section with a minimum thickness of 350 µm and a maximum thickness of 525 pm; and the second resin layer had a wedge-shaped cross section with a minimum thickness of 350 µm and a maximum thickness of 525 µm. The entire interlayer film for laminated glass had a wedge-shaped cross section with a minimum thickness of 1560 µm, a maximum thickness of 2010 µm, and a wedge angle θ of 0.45 mrad. The interlayer film for laminated glass was thinnest at one edge and thickest at the other edge. The minimum thickness and maximum thickness were measured by observation using an optical microscope.

The interlayer film was interposed between two transparent float glass plates (1000 mm in length × 300 mm in width × 2.5 mm in thickness) to prepare a laminate. The laminate was temporarily press-bonded using a heating roll at 230°C. The temporarily press-bonded laminate was press-bonded by a roll heat method using an autoclave under a pressure of 1.2 MPa at 135°C for 20 minutes, thereby obtaining a laminated glass (1000 mm in length × 300 mm in width).

### (Production of laminated glass for luminance measurement)

The interlayer film (thin part) having a length of 10 cm and a width of 10 cm was cut out in a manner the center thereof was 10 cm from one edge and on the line with the minimum distance from the one edge to the other edge. The resulting interlayer film (thin part) was interposed between two transparent float glass plates (5 cm in length × 5 cm in width × 2.5 mm in thickness) to prepare a laminate. The laminate was temporarily press-bonded using a heating roll at 230°C. The temporarily press-bonded laminate was press-bonded by a roll heat method using an autoclave under a pressure of 1.2 MPa at 135°C for 20 minutes, thereby obtaining a laminated glass for luminance measurement (5 cm in length × 5 cm in width).

### (Examples 40 to 44, and Comparative Examples 16 and 17)

An interlayer film for laminated glass and a laminated glass were produced as in Example 39, except that the following items were changed as shown in Table 10 or 11: type of polyvinyl butyral resin, type of light-emitting particles, the amount of light-emitting particles, the amount of the plasticizer, the minimum thickness of the first resin layer, the maximum thickness of the first resin layer, the minimum thickness of the sound-insulating layer, the maximum thickness of the sound-insulating layer, the minimum thickness of the second resin layer, the maximum thickness of the second resin layer, the minimum thickness of the light-emitting layer, the maximum thickness of the light-emitting layer, the minimum thickness of the entire interlayer film, the maximum thickness of the entire interlayer film, and the wedge angle θ.

The above production of an interlayer film for laminated glass, a laminated glass, and a laminated glass for luminance measurement was performed as in Example 39, except that: the amounts of sodium chloride, potassium chloride, and magnesium chloride in the resin composition for light-emitting layers were changed so that the resulting light-emitting layer contained sodium, potassium, and magnesium in amounts shown in Table 10 or 11; and the europium complex shown in Table 10 or 11 was used.

### (Evaluation)

The interlayer films for laminated glass and laminated glasses obtained in the examples and comparative examples were evaluated by the methods below. Tables 9 to 11 show the results.

### (1) Measurement of the amounts of metals in light-emitting layer, shape-adjusting layer, first resin layer, second resin layer, and sound insulating layer

The resin composition prepared for producing the interlayer film for laminated glass was extruded with an extruder to prepare a light-emitting layer and an adhesive layer each having a single layer structure as samples for measuring the metal contents thereof.

The metal contents of the light-emitting layer, shape-adjusting layer, first resin layer, second resin layer, and sound insulating layer were measured with an ICP emission spectrometer (ICPE-9000) available from Shimadzu Corporation. The specific procedure of the measurement is as follows. An amount of 0.3 g of light-emitting layer as a sample was put in an insert container together with 6 mg of nitric acid. Separately, 6 mg of ultrapure water and 1 mg of hydrogen peroxide were put in a dissolution vessel. The insert container was placed in the dissolution vessel, and the vessel was capped.

The dissolution vessel was heated at 200°C for 15 minutes using a microwave sample digestion system "ETHOS One" available from Milestone General K.K. Subsequently, the content of the insert container was diluted with ultrapure water with a resistivity of 18.2 MΩ·cm at 25°C to prepare a test solution. The metal contents of the test solution were analyzed in a closed system using an ICP emission spectrometer (ICPE-9000) available from Shimadzu Corporation. The amounts of metals in the light-emitting layer and adhesive layer were calculated from the determined metal contents.

### (2) Evaluation of initial light-emitting properties

The laminated glasses for luminance measurement were irradiated with light at an entire face in a dark room. The light was emitted from a high power xenon light source ("REX-250" available from Asahi Spectra Co., Ltd, irradiation wavelength: 405 nm) located 10 cm away from the face of the laminated glass in the perpendicular direction. The luminance at 45 degrees to the face of the laminated glass irradiated with light was measured with a luminance meter ("SR-3AR" available from Topcon Technohouse Corporation) disposed at a minimum distance of 35 cm away from the face of the laminated glass on the side at which the light was emitted.

### (Evaluation of double image)

The laminated glasses obtained in the examples and comparative examples (1000 mm in length × 300 mm in width) were each placed at the windshield position. Image information from a display unit disposed below the laminated glass was reflected on the laminated glass. Whether double image phenomenon occurred or not was observed with eyes from a predetermined position. The laminated glasses causing no double image phenomenon were evaluated as "○ (good)", while the laminated glasses causing double image phenomenon were evaluated as "× (poor)".

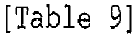

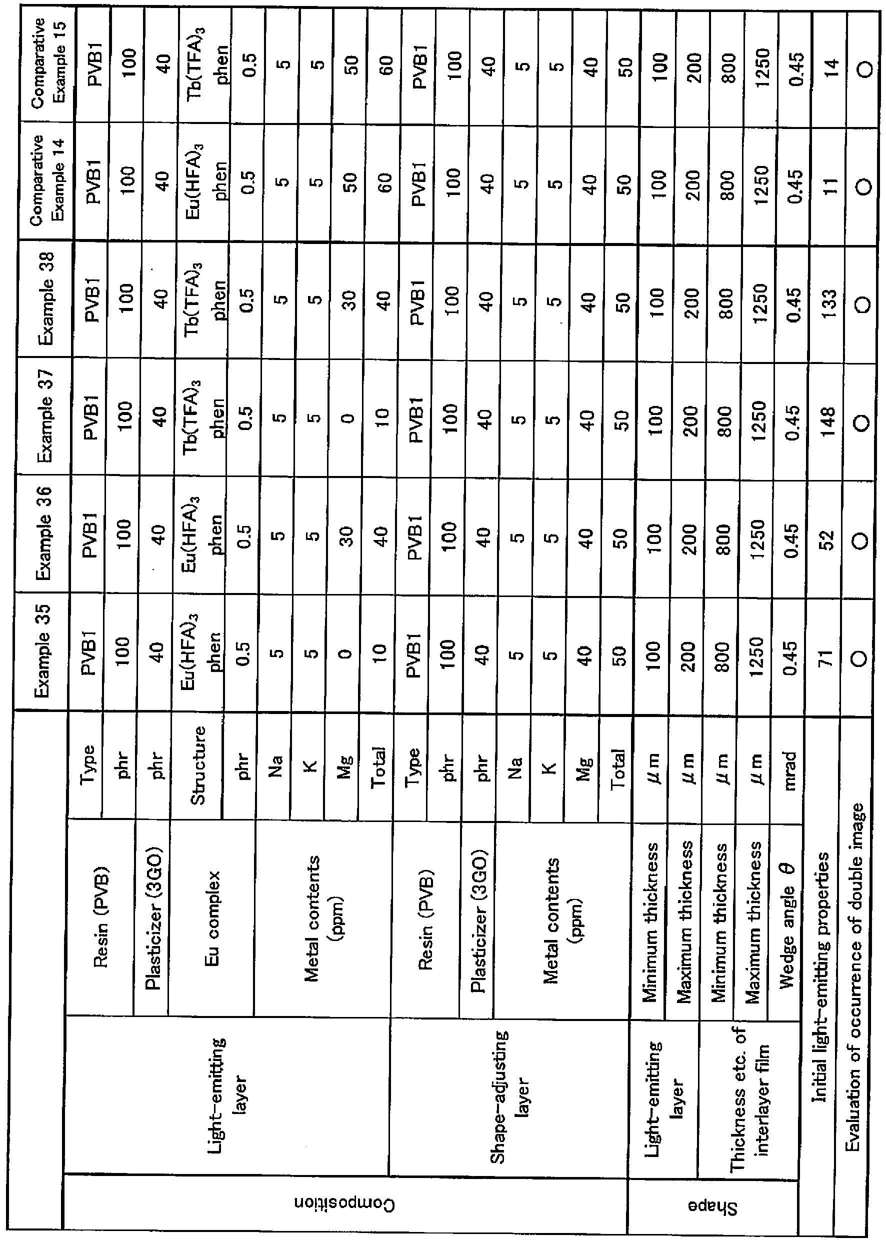

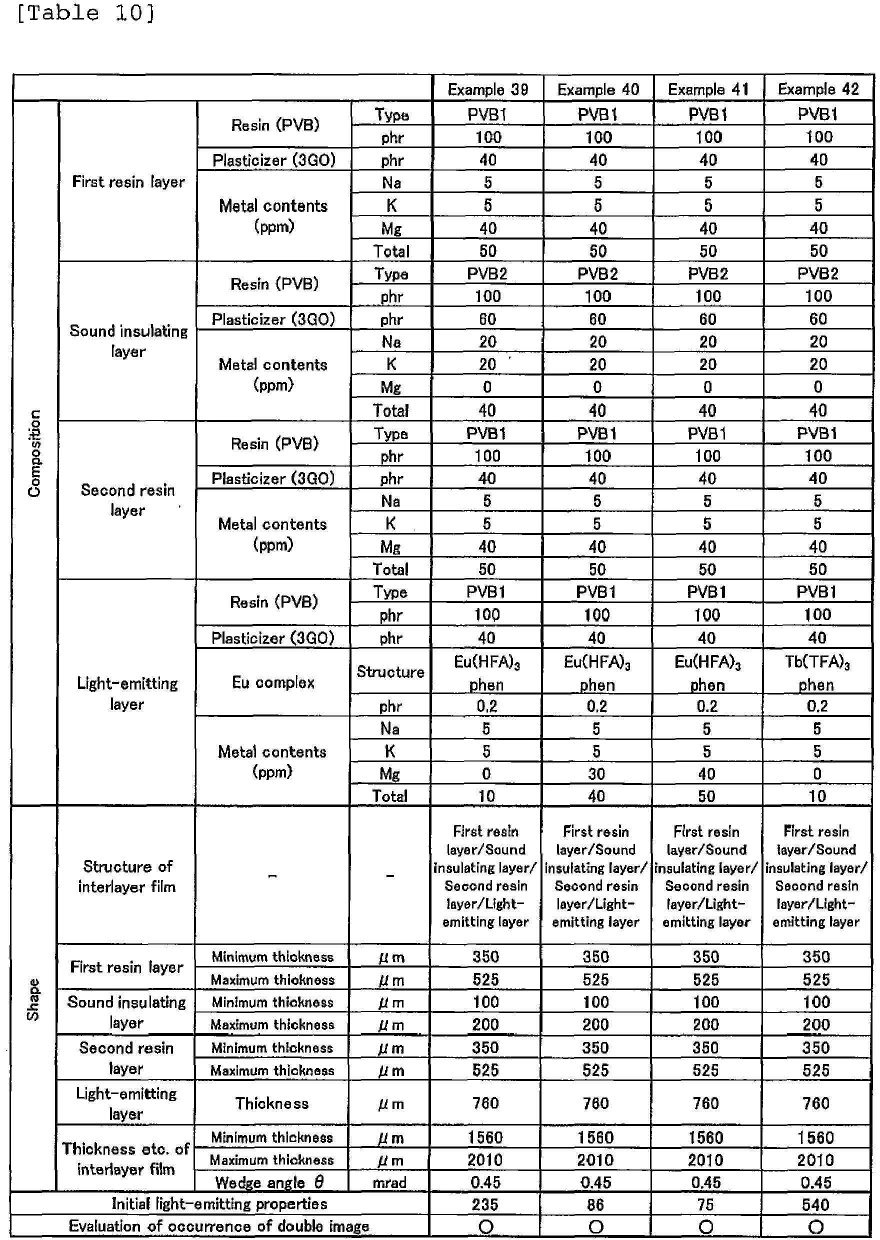

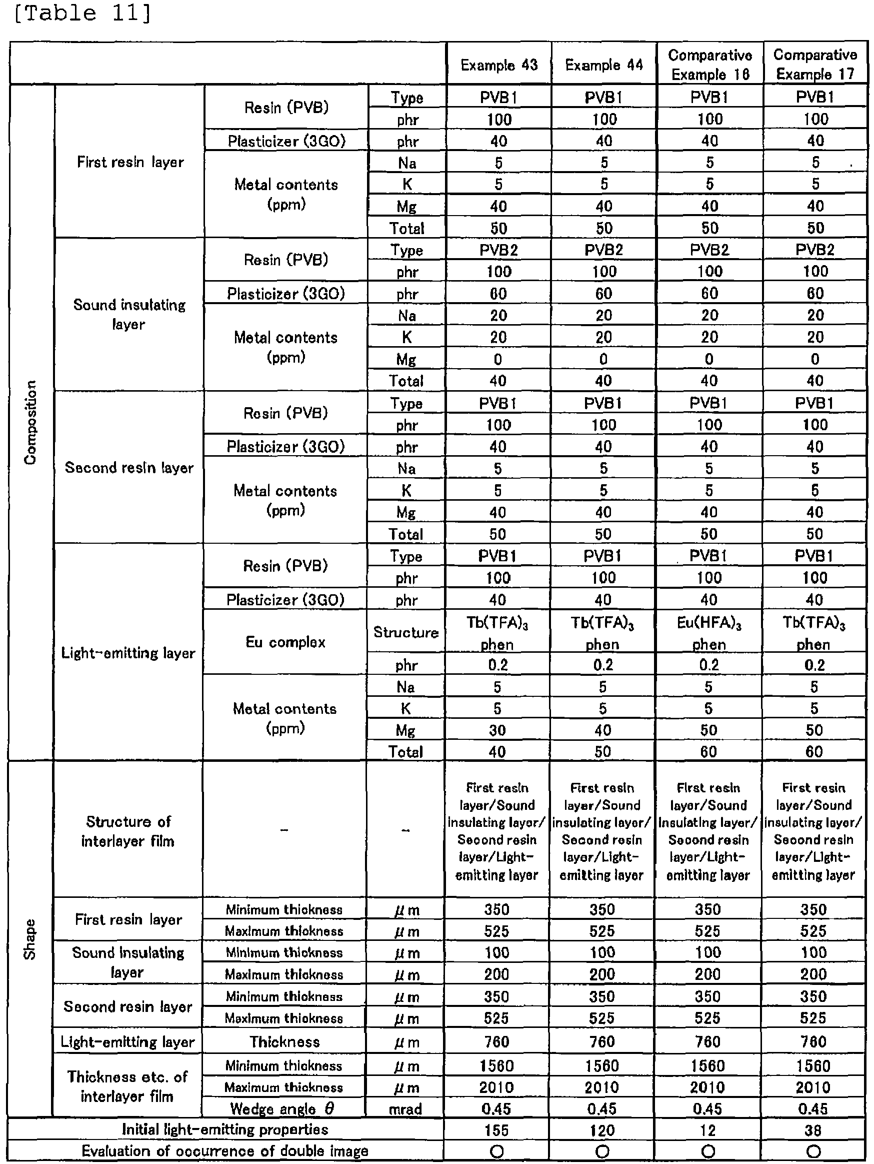

### INDUSTRIAL APPLICABILITY

The present invention can provide an interlayer film for laminated glass capable of displaying images with a high luminous intensity when irradiated with a light beam, and a laminated glass including the interlayer film for laminated glass.

### REFERENCE SIGNS LIST

- 1:: interlayer film for laminated glass
- 11:: light-emitting layer
- 12:: shape-adjusting layer
- 2:: interlayer film for laminated glass
- 21:: light-emitting layer
- 22:: shape-adjusting layer
- 23:: shape-adjusting layer
- 3:: interlayer film for laminated glass
- 31:: light-emitting layer
- 32:: shape-adjusting layer
- 33:: shape-adjusting layer
- 4:: interlayer film for laminated glass
- 41:: light-emitting layer
- 42:: adhesive layer
- 5:: interlayer film for laminated glass
- 51:: light-emitting layer
- 52:: adhesive layer
- 53:: adhesive layer
- 6:: interlayer film for laminated glass
- 61:: light-emitting layer
- 62:: adhesive layer
- 63:: adhesive layer

## Claims

1. An interlayer film for laminated glass, comprising:
a light-emitting layer containing a thermoplastic resin and a lanthanoid complex with a polydentate ligand containing a halogen atom; and
an adhesive layer containing a thermoplastic resin and at least one metal salt selected from the group consisting of alkali metal salts, alkaline earth metal salts, and magnesium salts,
the light-emitting layer containing a smaller total amount, as measured with an ICP emission spectrometer, of alkali metals, alkaline-earth metals, and magnesium than the adhesive layer.

2. The interlayer film for laminated glass according to claim 1,
wherein the lanthanoid complex with a polydentate ligand containing a halogen atom is a lanthanoid complex with a bidentate ligand containing a halogen atom or a lanthanoid complex with a tridentate ligand containing a halogen atom.

3. The interlayer film for laminated glass according to claim 2,
wherein the total amount of sodium, potassium, and magnesium in the light-emitting layer, as measured with an ICP emission spectrometer, is smaller than the total amount of sodium, potassium, and magnesium in the adhesive layer.

4. The interlayer film for laminated glass according to claim 2 or 3,
wherein the light-emitting layer contains not more than 40 ppm of magnesium, as measured with an ICP emission spectrometer.

5. The interlayer film for laminated glass according to claim 2, 3, or 4,
wherein the halogen atom is a fluorine atom.

6. The interlayer film for laminated glass according to claim 2, 3, 4, or 5,
wherein the light-emitting layer contains a lanthanoid complex with a bidentate ligand containing a halogen atom and having an acetylacetone skeleton.

7. The interlayer film for laminated glass according to claim 1, 2, 3, 4, 5 or 6,
wherein the thermoplastic resin of the light-emitting layer is a polyvinyl acetal resin, and the thermoplastic resin of the adhesive layer is a polyvinyl acetal resin.

8. A laminated glass comprising:
two transparent plates; and
the interlayer film for laminated glass according to claim 2, 3, 4, 5, 6 or 7 interposed between the transparent plates.
